# EUROPEAN PATENT SPECIFICATION

(11) **EP 2 428 313 B1**
(45) Date of publication and mention of the grant of the patent: **19.06.2013**
(21) Application number: 11179905.2
(22) Date of filing: 02.09.2011
(51) Int. Cl.: B23Q 11/00, B23B 51/06, B28D 7/02

(54) **Dust collecting device**
Staubsammelvorrichtung
Dispositif d'aspiration de poussière

(30) Priority: 10.09.2010 JP 2010203422; 10.09.2010 JP 2010203424
(43) Date of publication of application: 14.03.2012
(73) Proprietor: Makita Corporation, Anjo, Aichi 446-8502 (JP)
(72) Inventor: Miwa, Masao, Anjo, Aichi 446-8502 (JP); Arakawa, Takuo, Anjo, Aichi 446-8502 (JP)
(74) Representative: Kramer - Barske - Schmidtchen

(56) References cited:
- EP-A1- 2 199 013
- DE-A1- 2 918 629
- DE-C- 479 486
- GB-A- 2 309 660
- US-A- 4 097 176

## Description

### BACKGROUND OF THE INVENTION

### Field of the Invention

The invention relates to a dust collecting device for collecting dust generated when a power tool performs a predetermined operation.

### Description of the Related Art

US 4,097,176 A describes a particle-aspirating accessory for a hammer drill, according to the preamble of claim 1.

In a power tool for performing an operation such as a hammering or hammer drill operation, on a workpiece such as concrete, by a tool bit in the form of a bit, dust is generated during operation. Therefore, in some conventional power tools, an axially extending dust suction hole is formed in a hammer bit and has an open front end formed as a dust suction port, so that the hammer bit forms an internal dust suction type bit for collecting dust generated during operation through the dust suction hole. A dust collecting device utilizing such an internal dust suction type bit is disclosed in Japanese laid-open patent publication No.H11-77662. This dust collecting device has a cylindrical dust collecting hood which is mounted on a shank of a bit in such a manner as to surround a discharge port of a dust suction hole and collects dust in an outside dust collector through a hose connected to the dust collecting hood.

In the known dust collecting device utilizing an internal dust suction type bit as described above, the dust collecting hood and the hose are mounted to the dust suction bit itself, so that the weight of the bit is increased by the weights of the dust collecting hood and the hose and the bit is not well balanced, which affects the operability. Therefore, in this point, further improvement is desired.

### SUMMARY OF THE INVENTION

Accordingly, it is an object of the invention to provide a technique which contributes to an improvement of operability in a dust collecting device which is used with a power tool for performing an operation using an internal dust suction type bit and collects dust generated by operation.

Above-described object can be achieved by a dust collecting device according to claim 1.

Accordingly, the dust collecting part is designed as a dust collecting part for internal dust suction type bits which covers the dust discharge port by the closed space and the dust collecting part is fitted on the dust collecting device body. Specifically, the dust collecting device including the dust collecting part is mounted on the tool body of the power tool. With this construction, the weight of the bit can be avoided from increasing by the weights of the dust collecting part and a hose, so that the power tool is easy to operate and its operability can be improved.

According to a further embodiment, the dust collecting device is used with a power tool in which the tool bit configured as the internal dust suction type bit and a second tool bit can be mounted to the tool body by replacement. The second tool bit does not have a dust collecting passage in its inside and performs at least one of hammering operation by linear movement in the axial direction, drilling operation by rotation around its axis and hammer drill operation by linear movement and rotation. In place of the dust collecting part, a second dust collecting part of the dust collecting device can be mounted to the dust collecting device body and covers the second tool bit over a predetermined range in the axial direction of the second tool bit so as to form an external dust collecting passage around the second tool bit. A user can select either a first dust suction manner which is defined by combination of the internal dust suction type bit and the dust collecting part for internal dust suction type bits or a second dust suction manner which is defined by combination of the second tool bit and the second dust collecting part.

Accordingly, with the construction in which the user can select either the first dust suction manner or the second dust suction manner, a convenient dust collecting device can be provided which can be used in various operations using the power tool.

According to a further embodiment, in the dust suction device, the second tool bit is used with the power tool in which a first bit for performing hammer drill operation by linear movement and rotation and a second bit for performing hammering operation only by linear movement can be attached to the tool body by replacement. The second dust suction manner includes a first operation dust suction manner that is defined by combination ofthe first bit and a first bit dust collecting part which covers the first bit along its entire length and a second operation dust suction manner that is defined by combination of the second bit and a second bit dust collecting part which covers a region of the second bit other than a bit tip and the user can select either the first operation dust suction manner or the second operation dust suction manner.

Accordingly, with the construction in which the first operation dust suction manner and the second operation dust suction manner can be further selectively used in the second dust suction manner, the convenience of the dust collecting device can be further improved.

According to a further embodiment, in the dust collecting device in which the dust collecting part is designed for internal dust suction type bits, in a region in which the dust collecting part is fitted on the dust collecting device body, the dust collecting part has a dust collecting part side mounting part formed by one of a recessed part and a protruding part, and the dust collecting device body has a body side mounting part formed by the other of the recessed part and the protruding part. The body side mounting part can be moved in a direction transverse to the axial direction of the tool bit with respect to the dust collecting device body between an engaged position to be engaged with the dust collecting part side mounting part and a disengaged position to be disengaged from the dust collecting part side mounting part. In the engaged position, the body side mounting part prevents the dust collecting part fitted on the dust collecting device body from becoming detached from the dust collecting device body and holds this state, while in the disengaged position, it allows the dust collecting part to be mounted to and removed from the dust collecting device body.

According to the dust collecting device, in the state in which the dust collecting part is fitted on the dust collecting device body, the body side mounting part is moved to the engaged position with respect to the dust collecting device body and engaged with the dust collecting part side mounting part. In this manner, the body side mounting part prevents the dust collecting part from becoming detached from the dust collecting device body. Thus, the mounted state of the dust collecting part with respect to the dust collecting device body can be securely maintained, so that the dust collecting part is prevented from unintentionally becoming detached from the dust collecting device body during operation. When the body side mounting part is moved to the disengaged position, due to disengagement of the body side mounting part from the dust collecting part side mounting part, the dust collecting part can be easily mounted to and removed from the dust collecting device body.

According to a further embodiment, in the dust collecting device in which the second dust collecting part can be mounted to the dust collecting device body and forms the external dust collecting passage around the tool bit, in a region in which the second dust collecting part is fitted on the dust collecting device body, the second dust collecting part has a dust collecting part side mounting part formed by one of a recessed part and a protruding part, and the dust collecting device body has a body side mounting part formed by the other of the recessed part and the protruding part. The body side mounting part can be moved in a direction transverse to the axial direction of the tool bit with respect to the dust collecting device body between an engaged position to be engaged with the dust collecting part side mounting part and a disengaged position to be disengaged from the dust collecting part side mounting part. In the engaged position, the body side mounting part prevents the second dust collecting part fitted on the dust collecting device body from becoming detached from the dust collecting device body and holds this state, while in the disengaged position, it allows the second dust collecting part to be mounted to and removed from the dust collecting device body.

According to the dust collecting device, in the state in which the second dust collecting part is fitted on the dust collecting device body, the body side mounting part is moved to the engaged position with respect to the dust collecting device body and engaged with the dust collecting part side mounting part. In this manner, the body side mounting part prevents the second dust collecting part from becoming detached from the dust collecting device body. Thus, the mounted state of the second dust collecting part with respect to the dust collecting device body can be securely maintained, so that the second dust collecting part is prevented from unintentionally becoming detached from the dust collecting device body during operation. When the body side mounting part is moved to the disengaged position, due to disengagement of the body side mounting part from the dust collecting part side mounting part, the second dust collecting part can be easily mounted to and removed from the dust collecting device body.

According to a further embodiment, a power tool having the dust collecting device as defined in any one of claims 1 to 6 is provided. Thus, the power tool can be provided with the dust collecting device which is effective in improving the operability.

Accordingly, a technique is provided which contributes to improvement of operability in a dust collecting device which is used with a power tool for performing an operation using an internal dust suction type bit and collects dust generated by operation.

As another aspect, a representative dust collecting device is provided which is attached to a power tool that performs a predetermined operation on a workpiece by driving a tool bit coupled to a front end region of a tool body, and collects dust generated by operation. The "power tool" to which the dust collecting device is applied typically includes an electric hammer or a hammer drill for use in chipping operation, and a hammer drill or an electric drill for use in drilling operation.

The dust collecting device includes a dust collecting device body which is mounted to the tool body, and a cylindrical dust collecting hood which is fitted on a front end of the dust collecting device body and covers the tool bit. In a region in which the dust collecting hood is fitted onto the dust collecting device body, the dust collecting hood has a hood-side mounting part formed by one of a recessed part and a protruding part and the dust collecting device body has a body-side mounting part formed by the other of the recessed part and the protruding part. The body-side mounting part is allowed to move with respect to the dust collecting device body in a direction transverse to an axial direction of the tool bit between an engaged position to be engaged with the hood-side mounting part and a disengaged position to be disengaged from the hood-side mounting part. In the engaged position, the body-side mounting part retains the dust collecting hood fitted on the dust collecting device body and prevents the dust collecting hood from becoming detached from the dust collecting device body, while, in the disengaged position, the body-side mounting part allows attachment and detachment of the dust collecting hood with respect to the dust collecting device body.

According to the dust collecting device, in the state in which the dust collecting hood is fitted on a front end of the dust collecting device body, the body-side mounting part is engaged with the hood-side mounting part by relative movement of the body-side mounting part to the engaged position, so that the dust collecting hood is prevented from becoming detached from the dust collecting device body. Therefore, the dust collecting hood can be securely held attached to the dust collecting device body and can be prevented from unintentionally becoming detached from the dust collecting device body during operation. On the other hand, the body-side mounting part is disengaged from the hood-side mounting part by relative movement of the body-side mounting part to the disengaged position, so that attachment and detachment of the dust collecting hood with respect to the front end of the dust collecting device body can be facilitated.

According to a further embodiment, the dust collecting device further includes an elastic member which is formed separately from the dust collecting device body and the body-side mounting part and biases the body-side mounting part toward the engaged position in which the body-side mounting part is engaged with the hood-side mounting part.
According to this invention, with the construction in which the body-side mounting part is biased toward the engaged position by the elastic member, the body-side mounting part can be disengaged from the hood-side mounting part when it is moved to the disengaged position against the biasing force of the elastic member. Therefore, the depth (amount) of engagement of the body-side mounting part with the hood-side mounting part can be increased so that the retaining force is increased, while maintaining ease of attachment and detachment of the dust collecting hood. Further, with the construction in which the elastic member is formed separately, compared with a construction in which the body-side mounting part is formed by a resin spring integrally formed with the dust collecting device body, sag of the elastic member is less, so that durability can be increased.

According to a further embodiment, the body-side mounting part is formed at two opposed locations on an outer circumferential surface of a front end part of the dust collecting device body.
Accordingly, with the above-described construction, the dust collecting hood can be more securely held in the attached state. Further, forces can be applied to the two body-side mounting parts toward each other by holding them with user's fingers, so that it is easy to operate.

According to a further embodiment, the dust collecting device further includes an operating part which is operated to move the body-side mounting part between the engaged position and the disengaged position. When the body-side mounting part is in the engaged position, an outer surface of the operating part is flush with an outer surface of the dust collecting device body.
Accordingly, in the state in which the dust collecting hood is fitted on the dust collecting device body, the outer surface of the operating part on the body-side mounting part is flush with the outer surface of the dust collecting device body. Therefore, for example, such a trouble that an external force is unintentionally applied to the operating part during operation so that the body-side mounting part is moved to the disengaged position is not caused.

According to a further embodiment, a power tool having the dust collecting device as defined in any one of claims 1 to 4 is provided. Therefore, the power tool can be provided with the dust collecting device in which the dust collecting hood can be securely held attached to the dust collecting device body and in which the dust collecting hood can be easily attached and detached with respect to the front end of the dust collecting device body.

Other objects, features and advantages will be readily understood after reading the following detailed description together with the accompanying drawings and the claims.

### BRIEF DESCRIPTION OF THE DRAWINGS

FIG. 1 is a side view, partly in section, showing an entire structure of a hammer drill to which a dust collecting device for drilling operation according to an embodiment is attached.
FIG. 2 is a sectional view showing an entire structure of the dust collecting device for drilling operation.
FIG. 3 is an enlarged view of part A in FIG. 2.
FIG. 4 is a sectional view taken at a position displaced 180 degrees in the circumferential direction from the sectional position in FIG. 3 and showing a removal prevention mechanism for a dust collecting hood.
FIG. 5 is a sectional view showing an entire structure of a dust collecting device for chipping operation.
FIG. 6 is an enlarged view of part B in FIG. 5.
FIG. 7 is a sectional view taken at a position displaced 180 degrees in the circumferential direction from the sectional position in FIG. 6 and showing a removal prevention mechanism for a dust collecting hood.
FIG. 8 is a sectional view showing an entire structure of a dust collecting device for dust suction bits.
FIG. 9 is an enlarged view of part C in FIG. 8.
FIG. 10 is a sectional view taken at a position displaced 180 degrees in the circumferential direction from the sectional position in FIG. 9 and showing a removal prevention mechanism for a dust collecting hood.
FIG. 11 is an external view, showing an entire structure of an electric hammer to which a dust collecting device according to a second embodiment is attached.
FIG. 12 is a sectional view showing an entire structure of the dust collecting device.
FIG. 13 is an enlarged sectional view of part A in FIG. 11.
FIG. 14 is an enlarged sectional view of part B in FIG. 12.
FIG. 15 is a sectional view showing an entire structure of a dust collecting device according to a third embodiment.
FIG. 16 is an enlarged sectional view of part C in FIG. 15.
FIG. 17 is a sectional view showing a dust collecting device according to a fourth embodiment.
FIG. 18 is a sectional view of the dust collecting device, showing a different section from that shown in FIG. 17.

### DETAILED DESCRIPTION OF THE INVENTION

Each of the additional features and method steps disclosed above and below may be utilized separately or in conjunction with other features and method steps to provide and manufacture improved dust collecting device and method for using such duct collecting device and devices utilized therein. Representative examples of the invention, which examples utilized many of these additional features and method steps in conjunction, will now be described in detail with reference to the drawings. This detailed description is merely intended to teach a person skilled in the art further details for practicing preferred aspects of the present teachings and is not intended to limit the scope of the invention. Only the claims define the scope of the claimed invention. Therefore, combinations of features and steps disclosed within the following detailed description may not be necessary to practice the invention in the broadest sense, and are instead taught merely to particularly describe some representative examples of the invention, which detailed description will now be given with reference to the accompanying drawings.

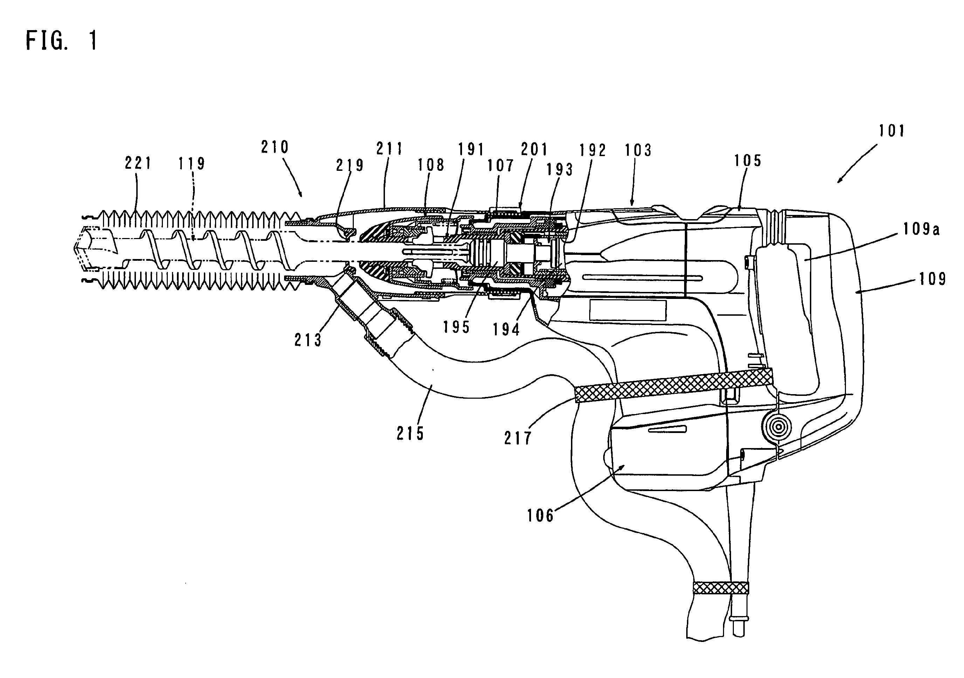

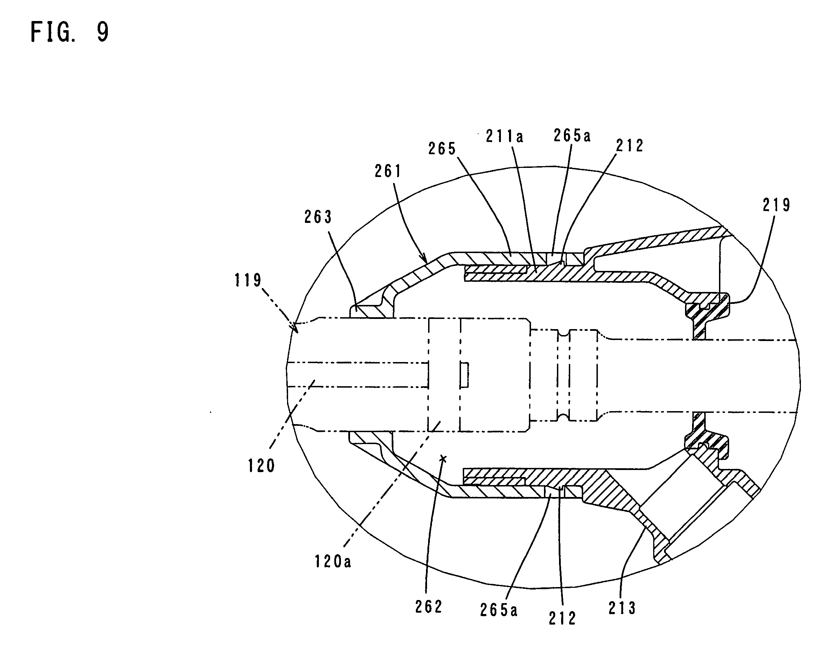

A dust collecting device according to an embodiment of the invention is now described with reference to FIGS. 1 to 10. This embodiment is explained as being applied to an electric hammer drill which is a representative example of a power tool. FIG. 1 shows a hammer drill 101 with an auxiliary handle in the form of a side grip 201 (only partly shown in the drawing) and a dust collecting device 210 attached thereto. The construction of the hammer drill 101 is now briefly explained with reference to FIG. 1. The hammer drill 101 mainly includes a body 103 that forms an outer shell of the hammer drill 101, an elongate hammer bit 119 detachably coupled to a tip end region (on the left as viewed in FIG. 1) of the body 103 via a tool holder 191, and a main handle in the form of a handgrip 109 that is connected to the body 103 on the side opposite the hammer bit 119 and designed to be held by a user. The body 103 is a feature that corresponds to the "tool body" according to the invention. The hammer bit 119 is inserted into a bit insertion hole of the tool holder 191 and held by a chuck 108 such that it is allowed to reciprocate with respect to the tool holder in its axial direction and prevented from rotating with respect to the tool holder in its circumferential direction. For the sake of convenience of explanation, the side of the hammer bit 119 is taken as the front and the side of the handgrip 109 as the rear.

The body 103 mainly includes a motor housing 106 that houses a driving motor (not shown), a crank housing 105 that houses a motion converting mechanism (not shown), a striking mechanism 193 and a power transmitting mechanism (not shown), and a generally cylindrical barrel 107 connected to a front of the crank housing 105. Rotating power of the driving motor is appropriately converted into linear motion by the motion converting mechanism 113 which mainly includes a crank mechanism, and then transmitted to the striking mechanism 193. As a result, an impact force is generated in the axial direction of the hammer bit 119 via the striking mechanism 193. Further, the speed of the rotating power of the driving motor is appropriately reduced by the power transmitting mechanism which mainly includes a plurality of gears, and then transmitted to the hammer bit 119 via a final shaft in the form of the tool holder 191, so that the hammer bit 119 is caused to rotate in its circumferential direction. The driving motor 111 is driven when a user depresses a trigger 109a disposed on the handgrip 109.

The striking mechanism 193 mainly includes a striking element in the form of a striker 194 which is slidably disposed within a bore of a cylinder 192 together with a piston of the crank mechanism, and an intermediate element in the form of an impact bolt 195 which is slidably disposed in the tool holder 191. The striker 194 is driven via an air spring action (pressure fluctuations) of an air chamber of the cylinder 192 which is caused by sliding movement of the piston. Then the striker 194 collides with (strikes) the impact bolt 195 and a striking force is transmitted to the hammer bit 119 via the impact bolt 195.

Further, the hammer drill 101 can be appropriately switched between hammering mode and hammer drill mode by a user. In hammering mode, chipping operation (hammering operation) is performed on a workpiece by applying only a striking force to the hammer bit 119 in the axial direction, and in hammer drill mode, drilling operation (hammer drill operation) is performed on a workpiece by applying a striking force in the axial direction and a rotating force in the circumferential direction. This technique is well known in the art and not directly related to the invention, and therefore its further description is omitted.

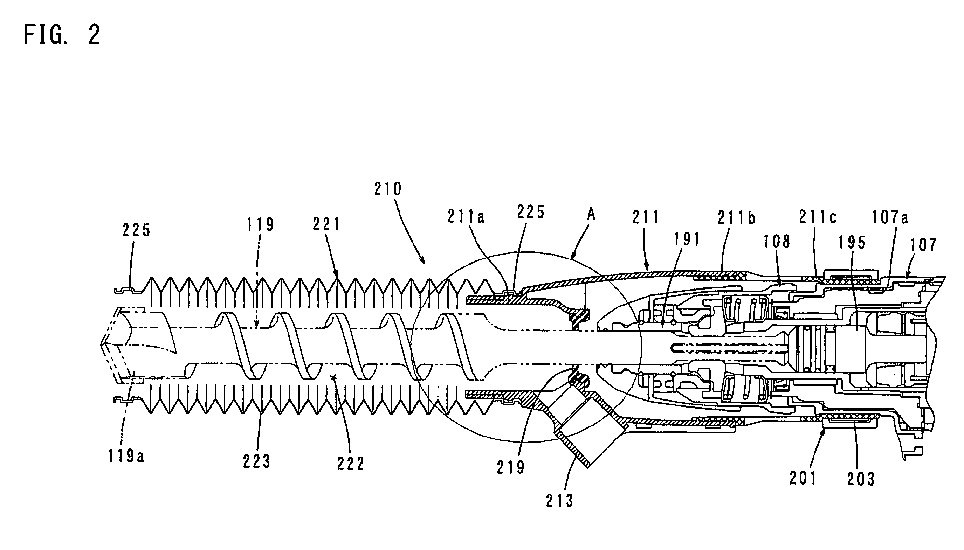

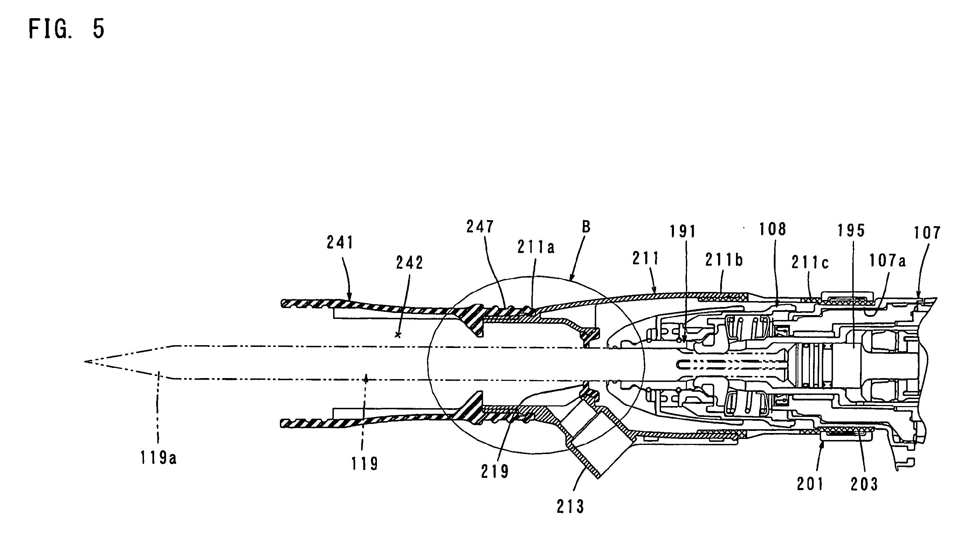

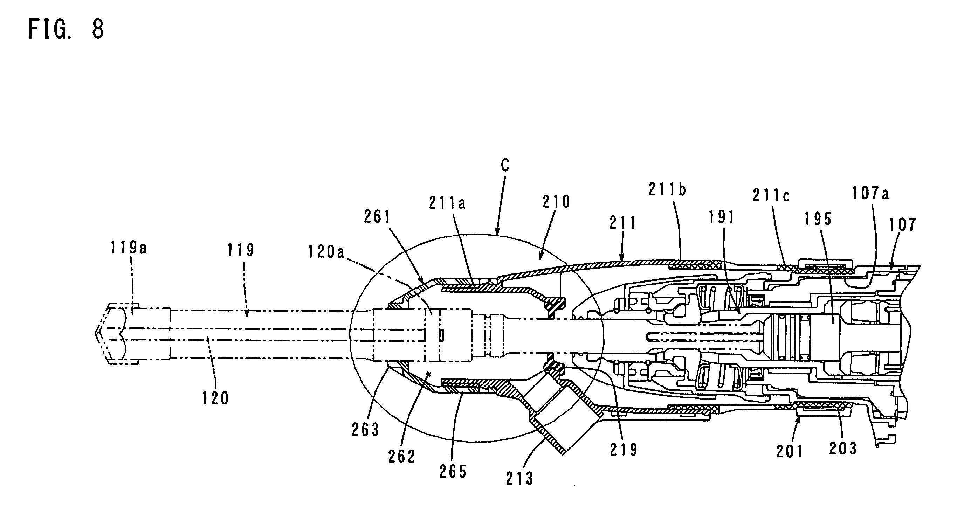

A dust collecting device 210 is now explained with reference to FIGS. 2 to 10. The dust collecting device 210 is attached to the hammer drill 101 having the above-described construction and serves to suck and collect dust generated during operation on a workpiece (such as concrete). In the hammer drill 101, several kinds of hammer bits 119 are provided for various operations. The hammer bits 119 may be selectively mounted to the tool holder 191 by replacement to perform the operation. In FIG. 2, the hammer bit 119 for drilling operation is shown mounted. In FIG. 5, the hammer bit 119 for chipping operation is shown mounted. In FIG. 8, the hammer bit 119 for drilling operation which has a dust collecting passage in the form of a dust suction hole 120 formed in its inside is shown mounted. The hammer bit 119 having the dust suction hole 120 is a feature that corresponds to the "tool bit" according to this invention. The hammer bit 119 not having a dust suction hole and the hammer bit 119 for chipping operation are features that correspond to the "second tool bit" according to this invention. Further, the hammer bit 119 not having a dust suction hole and the hammer bit 119 for chipping operation are features that correspond to the "first bit" and the "second bit", respectively, according to this invention. In the following description, the hammer bit 119 having the dust suction hole 120 is referred to as a dust suction bit. The dust suction bit 119 is a feature that corresponds to the "internal dust suction type bit" according to this invention.

As shown in FIG. 8, the dust suction hole 120 of the dust suction bit 119 has an open front end (on the bit tip 119a side) forming a dust suction port and extends in the center of the dust suction bit 119 in the axial direction toward the base (the mounting side) of the dust suction bit 119. The dust suction hole 120 has a dust discharge port 120a formed at a predetermined position and extending radially through the dust suction bit 119.

The dust collecting device 210 according to this embodiment is provided and configured to be applied to the hammer drill 101 in which the above-described several kinds of hammer bits 119 can be selectively used by replacement to perform an operation. The dust collecting device 210 mainly includes a dust cover in the form of a synthetic resin cylindrical mounting part 211 which is attached to the barrel 107 of the hammer drill 101 together with the side grip 201, an extendable dust collecting hood 221 (see FIG. 2) for use in drilling operation, a dust collecting hood 241 (see FIG. 5) for use in chipping operation, and a dust collecting hood 261 (see FIG. 8) for use with a dust suction bit 119. The dust collecting hoods 221, 241 261 can be removably attached to a front end of the cylindrical mounting part 211. The dust collecting hood 221 is constructed to be able to change its length in the longitudinal direction, and the dust collecting hood 241 is constructed such that its length in the longitudinal direction is kept unchanged.

The dust collecting hood 221 for use in drilling operation by the hammer bit 119 not having a dust suction hole (hereinafter referred to as the dust collecting hood 221 for drilling operation), the dust collecting hood 241 for chipping operation and the dust collecting hood 261 for use with a dust suction bit can be selectively attached to the front end of the cylindrical mounting part 211 by replacement according to the operation. Specifically, for drilling operation, the dust collecting device 210 is formed by combination of the cylindrical mounting part 211 and the dust collecting hood 221 for drilling operation. For chipping operation, the dust collecting device 210 is formed by combination of the cylindrical mounting part 211 and the dust collecting hood 241 for chipping operation. For drilling operation using the dust suction bit 119, the dust collecting device 210 is formed by combination of the cylindrical mounting part 211 and the dust collecting hood 261 for the dust suction bit 119. The cylindrical mounting part 211 is a feature that corresponds to the "dust collecting device body" according to this invention. The dust collecting hood 261 for the dust suction bit 119 is a feature that corresponds to the "dust collecting part", and the dust collecting hood 221 for drilling operation and the dust collecting hood 241 for chipping operation are features that each correspond to the "second dust collecting part" according to this invention.

As shown in FIG. 2, the cylindrical mounting part 211 is a generally cylindrical member extending in the axial direction of the hammer bit and has both ends open in the axial direction. The cylindrical mounting part 211 has a small-diameter cylindrical part 211a on the front and a large-diameter cylindrical part 211b on the opposite (rear) side. The small-diameter cylindrical part 211a is formed as a mounting region to which the dust collecting hood 221 for drilling operation, the dust collecting hood 241 for chipping operation and the dust collecting hood 261 for the dust suction bit 119 are selectively mounted. Further, a cylindrical part extension 211c which is provided to mount the cylindrical mounting part 211 to the body 103 of the hammer drill 101 is formed contiguously to a rear region (on the right as viewed in FIG. 2) of the large-diameter cylindrical part 211b. The cylindrical part extension 211c extends rearward from the large-diameter cylindrical part 211b and is split into several portions in the circumferential direction by a plurality of slits (not shown) each having an open rear end, so that it is allowed to elastically deform in the radial direction.

In order to mount the cylindrical mounting part 211 to the barrel 107, the cylindrical mounting part 211 is set to cover the front end portion of the barrel 107 from the front (the left as viewed in FIG. 2) and the cylindrical part extension 211c is fixed by a mounting band 203 for the side grip 201 which is mounted to the barrel 107. The mounting band 203 is set to be wrapped around the outer surface of a grip mounting part 107a formed on the barrel 107 and tightened or loosened by using a screw structure (not shown). Specifically, the dust collecting device 210 is fixed together with the side grip 201 on the grip mounting part 107a of the barrel 107 in the body 103 by tightening the cylindrical part extension 211c of the cylindrical mounting part 211 with the mounting band 203.

Further, a hose connecting port 213 is formed on the small-diameter cylindrical part 211a of the cylindrical mounting part 211 and communicates with an inner space of the dust collecting hood 221 for drilling operation, the dust collecting hood 241 for chipping operation or the dust collecting hood 261 for dust suction bits which is selectively mounted on the cylindrical mounting part 211. The hose connecting port 213 extends obliquely rearward from the outer surface of the small-diameter cylindrical part 211a, and a dust collecting hose 215 (see FIG. 1) which is used for connection with a dust collector (not shown) is connected to the hose connecting port 213. The dust collecting hose 215 is bound to the motor housing 106 with a banding band 217 in order to be prevented from interfering with the operation. Further, at least during operation, the other end of the dust collecting hose 215 is directly connected to an outside dust collector (not shown) or connected to a hose on the dust collector side. It is not essential for the dust collecting hose 215 to be connected to a dust collector which is provided separately from the hammer drill 101. For example, if the hammer drill 101 or the dust collecting device itself has a suction source including a motor and a dust collecting fan to be driven by the motor, the other end of the dust collecting hose 215 may be connected to the suction source. Further, a rubber seal 219 is mounted on the small-diameter cylindrical part 211a rearward of the hose connecting port 213 and serves as a sealing member for sealing a clearance between an inner circumferential surface of the small-diameter cylindrical part 211a and an outer circumferential surface of the hammer bit 119. Two diametrically opposed projections 212 are formed on the outer circumferential surface of the small-diameter cylindrical part 211a of the cylindrical mounting part 211 and radially protrude to a predetermined height.

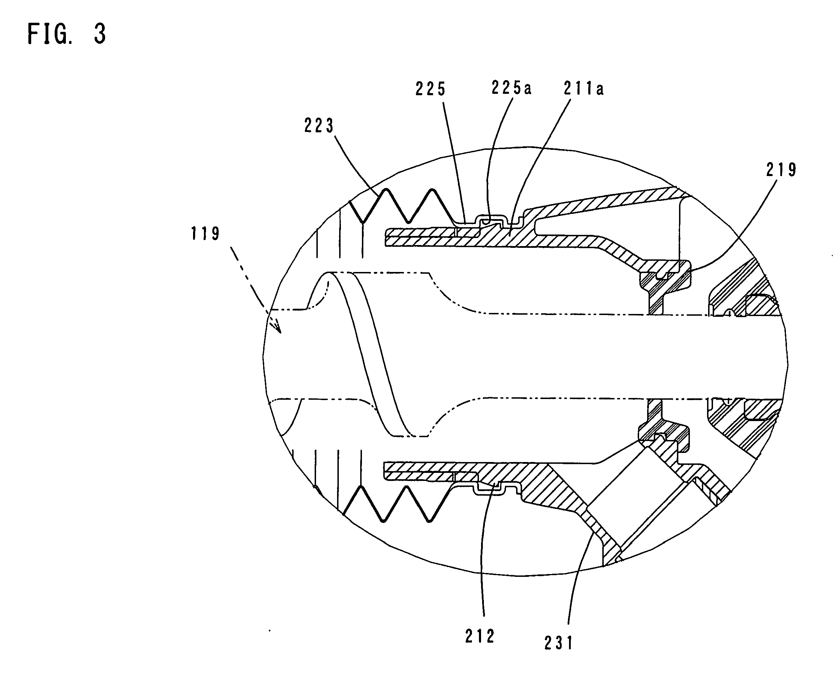

The dust collecting hood 221 for drilling operation is now explained. As shown in FIG. 2, the dust collecting hood 221 for drilling operation mainly includes an accordion bit covering part 223 which covers the hammer bit 119 not having a dust suction hole for drilling operation, in its entirety including the bit tip 119a and can extend and contract in the longitudinal direction. The bit covering part 223 has ring-like open end parts 225 on front and rear ends. Further, the bit covering part 223 is made of rubber or synthetic resin, and the inner diameter of the front and rear ring-like open end parts 225 is substantially equal to the inner diameter of valleys of the bit covering part 223. Further, a circumferentially extending annular recess 225a (see FIG. 3) is formed in each of the front and rear open end parts 225 and recessed outward.

In order to attach the above-described dust collecting hood 221 for drilling operation to the cylindrical mounting part 211, one (rear) open end part 225 of the bit covering part 223 is fitted onto the small-diameter cylindrical part 211a of the cylindrical mounting part 211. At this time, as shown in FIG. 3, the two diametrically opposed projections 212 formed on the outer circumferential surface of the small-diameter cylindrical part 211a is elastically engaged with the annular recess 225a formed in the inner circumferential surface of the open end part 225, by utilizing elastic deformation of the open end part 225. Thus, the dust collecting hood 221 is prevented from becoming easily detached from the cylindrical mounting part 211. The dust collecting hood 221 attached to the cylindrical mounting part 211 covers the hammer bit 119 and the inner space 222 of the dust collecting hood 221 forms a dust collecting passage. The inner space 222 of the dust collecting hood 221 is a feature that corresponds to the "external dust collecting passage" according to this invention.

The dust collecting hood 221 attached to the cylindrical mounting part 211 is arranged to surround the hammer bit 119, and has a longitudinal length long enough to cover the hammer bit 119 not having a dust suction hole, in its entirety including the bit tip 119a, as shown in FIG. 2. Specifically, a drilling operation of the hammer drill 101 is performed with the front end of the dust collecting hood 221 (an end surface of the front open end part 225) being pressed against the surface of the workpiece. Dust generated during drilling operation is sucked from a suction port in the form of an opening of the front open end part 225 into the inner space 222 of the dust collecting hood 221. The dust is then led from the inner space 222 into the outside dust collector through the hose connecting port 213 of the cylindrical mounting part 211 and the dust collecting hose 215 and collected in the outside dust collector. The accordion type bit covering part 223 contracts when pushed by the workpiece as drilling of the hammer bit 119 proceeds, so that the dust collecting effect can be maintained. The manner in which dust is sucked by combination of the hammer bit 119 not having a dust suction hole and the dust collecting hood 221 for drilling operation is a feature that corresponds to the "second dust suction manner" and the "first operation dust suction manner" according to this invention.

The dust collecting hood 241 for chipping operation is now explained. As shown in FIG. 5, the dust collecting hood 241 for chipping operation is a cylindrical member made of rubber or synthetic resin, having front and rear open ends and having a longitudinal length such that the bit tip 119a of the hammer bit 119 for chipping operation protrudes a predetermined length (long enough to be reliably kept visible) from the front end of the dust collecting hood 241 attached to the front end of the cylindrical mounting part 211. A circumferentially extending annular recess 247a is formed in an inner surface of a rear open end part 247 of the dust collecting hood 241 which is fitted over the small-diameter cylindrical part 211a of the cylindrical mounting part 211.

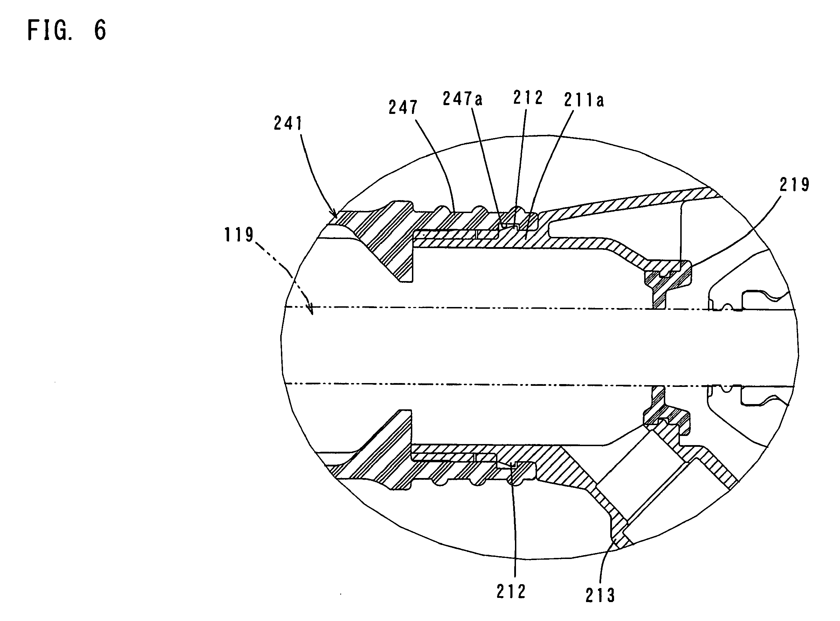

In chipping operation using the hammer drill 101, in order to attach the above-described dust collecting hood 241 for chipping operation to the cylindrical mounting part 211, the rear open end part 247 is fitted onto the small-diameter cylindrical part 211a of the cylindrical mounting part 211. At this time, as shown in FIG. 6, the two projections 212 formed on the small-diameter cylindrical part 211a are elastically engaged with the annular recess 247a which is formed in the inner circumferential surface of the open end part 247, by utilizing elastic deformation of the open end part 247. Thus, the dust collecting hood 241 is prevented from becoming easily detached from the cylindrical mounting part 211. The dust collecting hood 241 attached to the cylindrical mounting part 211 covers the hammer bit 119 with the bit tip 119a exposed to the outside, and an inner space 242 of the dust collecting hood 241 forms a dust collecting passage. The inner space 242 of the dust collecting hood 241 is a feature that corresponds to the "external dust collecting passage" according to this invention.

Dust generated during chipping operation is sucked from a front open end part 225 of the dust collecting hood 241 into the inner space 242 of the dust collecting hood 241. The dust is then led from the inner space 242 into the outside dust collector through the hose connecting port 213 of the cylindrical mounting part 211 and the dust collecting hose 215 and collected in the outside dust collector. The manner in which dust is sucked by combination of the hammer bit 119 for chipping operation and the dust collecting hood 241 for chipping operation is a feature that corresponds to the "second dust suction manner" and the "second operation dust suction manner" according to this invention.

The dust collecting hood 261 for dust suction bits is now explained. As shown in FIG. 8, the dust collecting hood 261 for dust suction bits is a cylindrical member having open front and rear ends and widened at its middle region in the longitudinal direction toward the rear into a generally trumpet-like form. In order to mount the dust collecting hood 261, a rear open end part 265 is fitted over the small-diameter cylindrical part 211a of the cylindrical mounting part 211 from the front. Specifically, the dust collecting hood 261 fitted on the small-diameter cylindrical part 211a extends forward in the axial direction of the hammer bit and covers a dust discharge port 120a of a dust suction hole 120 and its surrounding region. Further, the dust collecting hood 261 is disposed such that the inner circumferential surface of a front open end part 263 lies close to the outer surface of the dust suction bit 119 at a position forward of the dust discharge port with a slight clearance. Thus, an inner space 262 of the dust collecting hood 261 is closed, and the dust discharge port 120a communicates with the closed inner space 262. Thus, the dust collecting hood 261 is configured as a dust collecting part for internal dust suction type bits, and the closed inner space 262 is a feature that corresponds to the "closed space" according to this invention.

A plurality of cutout holes 265a are formed in the circumferential surface of the rear open end part 265 of the dust collecting hood 261 for dust suction bits at predetermined intervals in the circumferential direction (four at intervals of 90 degrees in this embodiment). When the rear open end part 265 is fitted over the front end of the small-diameter cylindrical part 211a of the cylindrical mounting part 211 from outside in order to mount the dust collecting hood 261 on the cylindrical mounting part 211, the two projections 212 of the small-diameter cylindrical part 211a are elastically engaged with two of the four cutout holes 265a by utilizing elastic deformation of the rear open end part 265 or the small-diameter cylindrical part 211a. Thus, the dust collecting hood 261 is prevented from becoming easily detached from the cylindrical mounting part 211.

Dust generated during drilling operation using the dust suction bit 119 is sucked from a front end opening of the dust suction hole 120 of the dust suction bit 119 and then discharged into the inner space 262 of the dust collecting hood 261 through the dust discharge port 120a. The dust is further led from the inner space 262 into the outside dust collector through the hose connecting port 213 and the dust collecting hose 215 and collected in the outside dust collector. The manner in which dust is sucked by combination of the dust suction bit 119 and the dust collecting hood 261 for dust suction bits is a feature that corresponds to the "first dust suction manner" according to this invention.

The dust collecting device 210 of this embodiment is constructed as described above. In operation using the hammer drill 101, the dust collecting hood 221 for drilling operation, the dust collecting hood 241 for chipping operation and the dust collecting hood 261 for dust suction bits can be selectively mounted to the cylindrical mounting part 211 by appropriate replacement according to the operation to be performed by the hammer drill 101. Specifically, according to this embodiment, the convenient dust collecting device 210 can be provided which can be used in various operations using the hammer drill 101.

Further, in this embodiment, in drilling operation using the dust suction bit 119 having the dust suction hole 120, the dust collecting hood 261 for collecting dust sucked through the dust suction hole 120 of the dust suction bit 119 is mounted to the body 103 of the hammer drill 101 via the cylindrical mounting part 211. Specifically, the dust collecting hood 261 is mounted to the body 103 of the hammer drill 101. For example, if it is constructed such that a dust collecting hood and a hose are mounted to a dust suction bit itself, the weight of the bit is increased by the weights of the dust collecting hood and the hose and the bit is not well balanced, so that the hammer drill 101 is hard to operate. According to this embodiment, however, with the construction in which the dust collecting hood 261 is mounted to the body 103 of the hammer drill 101, the weight of the hammer bit 119 can be avoided from increasing by the weights of the dust collecting hood and the hose. As a result, the above-described problem is eliminated and the hammer drill 101 becomes easy to operate.

Further, in this embodiment, in order to further ensure the mounted state (the removal prevented state) of the dust collecting hoods 221, 241, 261 with respect to the small-diameter cylindrical part 211a, a hook member 251 for hood removal prevention is provided on the cylindrical mounting part 211. The hook member 251 is now explained.

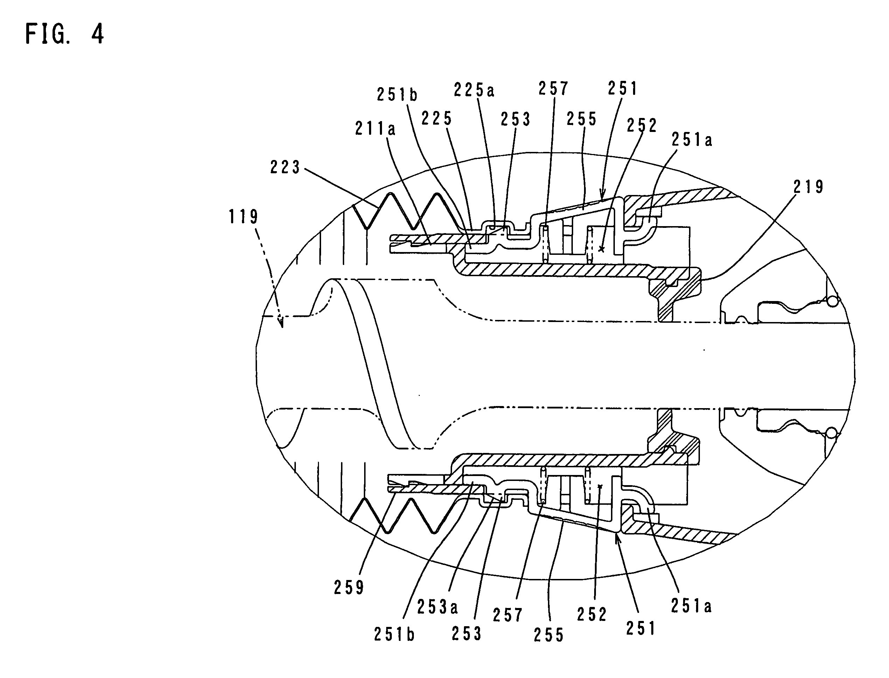

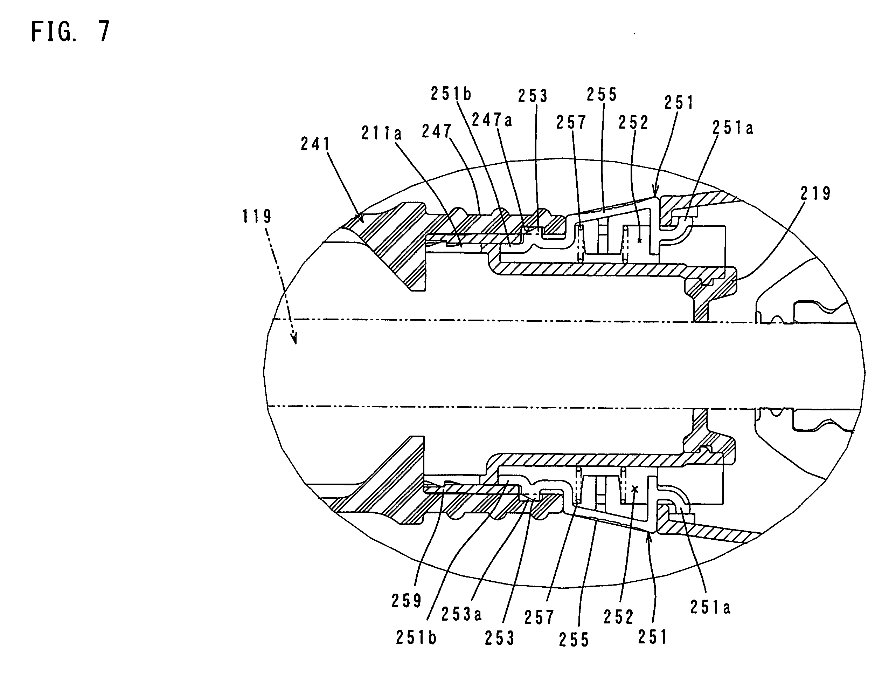

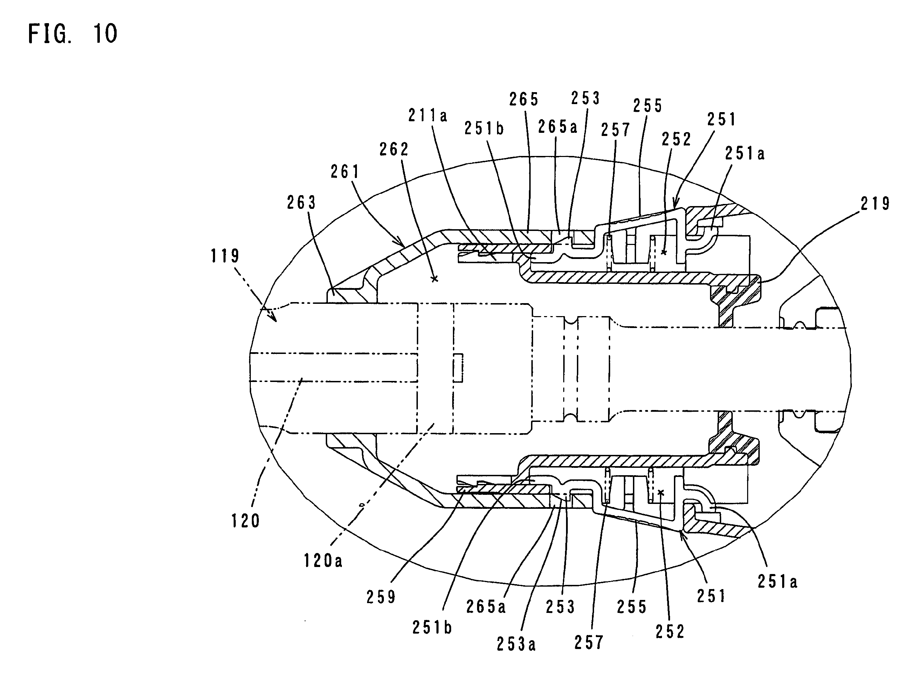

The removal preventing structure using the hook member 251 is shown in FIGS. 4, 7 and 10. FIG. 4 shows the removal prevented state of the dust collecting hood 221 for drilling operation. FIG. 7 shows the removal prevented state of the dust collecting hood 241 for chipping operation. FIG. 10 shows the removal prevented state of the dust collecting hood 261 for dust suction bits.

As shown in FIGS. 4, 7 and 10, two hook members 251 are diametrically opposed to each other on the outer circumferential surface of the small-diameter cylindrical part 211a of the cylindrical mounting part 211 in a region in which the dust collecting hoods 221, 241, 261 are fitted on the small-diameter cylindrical part 211a, and more particularly in a position displaced 90 degrees with respect to the projections 212 in the circumferential direction. Specifically, the hook members 251 and the projections 212 are alternately disposed on the small-diameter cylindrical part 211a with a 90-degree spacing in the circumferential direction. The hook member 251 has a protrusion 253, and the protrusion 253 can be engaged with and disengaged from the annular recess 225a formed in the open end part 225 of the dust collecting hood 221 for drilling operation, the annular recess 247a formed in the open end part 247 of the dust collecting hood 241 for chipping operation 247a, or two of the four cutout holes 265a formed in the open end part 265 of the dust collecting hood 261 for dust suction bits. The annular recesses 225a, 247a of the dust collecting hood 221, 241 and the cutout holes 265a of the collecting hood 261 are features that correspond to the "dust collecting part side mounting part" and the hook member 251 is a feature that correspond to the "body side mounting part" according to this invention.

A hook housing space 252 for housing each of the hook members 251 is formed in the small-diameter cylindrical part 211a. The hook housing space 252 extends a predetermined length in the longitudinal direction of the cylindrical mounting part 211 and is recessed radially inward from the outer surface. Each of the hook members 251 is formed of a generally plate-like member extending in the longitudinal direction, and the protrusion 253 is integrally formed on the front outer surface of the hook member 251 and protrudes in a radial direction of the cylindrical mounting part 211. An operating part in the form of a press part 255 is integrally formed on the rear outer surface of the hook member 251. The hook member 251 is disposed in the hook housing space 252, and in this state, the hook member 251 is allowed to move in the radial direction between an engaged position in which the protrusion 253 is engaged with the annular recess 225a or 247a or the cutout holes 265a of the dust collecting hood 221, 241 or 261, and a disengaged position in which such engagement is released.

Further, a coil spring 257 is disposed within the hook housing space 252 and biases the hook member 251 toward the engaged position. The coil spring 257 is disposed between the bottom of the hook housing space 252 and the inner surface of the hook member 251 and biases the hook member 251 radially outward. The coil spring 257 is a feature that corresponds to the "elastic member" according to this invention. When the hook member 251 is placed in the engaged position, the protruding height of the protrusion 253 in the radial direction is higher than that of the above-described projection 212 of the small-diameter cylindrical part 211a. Thus, the amount of engagement of the protrusion 253 with the annular recess 225a or 247a or the cutout holes 265a of the dust collecting hood 221, 241 or 261 is larger than that of the projection 212, so that the retaining force is increased. Further, the engagement of the protrusion 253 with the annular recess 225a or 247a or the cutout holes 265a is maintained by the biasing force of the coil spring 257.

The hook member 251 is disposed within the hook housing space 252 such that front and rear ends 251a, 251b of the hook member 251 in the longitudinal direction is placed in the inside of the small-diameter cylindrical part 211a. Further, the front and rear ends 251a, 251b abut against the inner surface of the small-diameter cylindrical part 211a in the radial direction by the biasing force of the coil spring 257, so that the hook member 251 is held in the engaged position. Thus, the inner surface of the small-diameter cylindrical part 211 a serves as a stopper for holding the hook member 251 in the engaged position.

The rear end 251a of the hook member 251 is generally L-shaped and extends radially outward through an opening of a rear wall of the hook housing space 252. In order to mount the hook member 251 to the small-diameter cylindrical part 211a, the rear end 251a of the hook member 251 is inserted through the opening of the rear wall of the hook housing space 252 and the hook member 251 is disposed within the hook housing space 252. At this time, the rear end 251a inserted through the opening of the rear wall of the hook housing space 252 is engaged with the rear wall and thus it does not easily become detached from the small-diameter cylindrical part 211a. Thus, the hook member 251 is prevented from becoming detached from the small-diameter cylindrical part 211a when the hook member 251 is mounted. Further, the front end 251b of the hook member 251 disposed within the hook housing space 252 is held in contact with the inner surface of a ring-like covering member 259 which is fixedly fitted on the outer surface of the front end of the small-diameter cylindrical part 211a in such a manner as to cover a front end region of the hook housing space 252.

When the press part 255 is pushed in with a finger from outside, the hook member 251 is moved to the disengaged position. Specifically, when the press part 255 is pushed in, the hook member 251 is moved within the hook housing space 252 to the disengaged position while being held substantially in parallel in the longitudinal direction, and the protrusion 253 is disengaged from the annular recess 225a or 247a or the cutout holes 265a of the dust collecting hood 221, 241 or 261. Thus, the hook member 251 for preventing removal of the dust collecting hood 221, 241 or 261 is released from the dust collecting hood. In this state, the dust collecting hood 221, 241 or 261 can be detached from the cylindrical mounting part 211 by pulling the dust collecting hood 221, 241 or 261 forward. When the hook member 251 is placed in the engaged position, the outer surface of the press part 255 is flush with the outer surface of the small-diameter cylindrical part 211a. Therefore, for example, such a trouble that an external force is unintentionally applied to the press part 255 during operation so that the hook member 251 is moved to the disengaged position and its removal prevention is released, can be prevented.

The end surface of the protrusion 253 of the hook member 251 in the protruding direction is formed by an inclined surface 253a which is inclined forward toward the axis. Therefore, when the open end part 225, 247 or 265 of the dust collecting hood 221, 241 or 261 is fitted onto the small-diameter cylindrical part 211a of the cylindrical mounting part 211, the inclined surface 253a of the protrusion 253 of the hook member 251 is pushed down to the disengaged position by the end of the open end part 225, 247 or 265. Then when the protrusion 253 is opposed to the annular recess 225a or 247a or the cutout holes 265a, the hook member 251 is returned to the engaged position by the biasing force of the coil spring 257. Therefore, the dust collecting hood 221, 241 or 261 can be easily attached to the cylindrical mounting part 211 simply by fitting the open end part 225, 247 or 265 of the dust collecting hood 221, 241 or 261 over the small-diameter cylindrical part 211a of the cylindrical mounting part 211.

According to this embodiment, when the dust collecting hood 221, 241 or 261 is fitted on the small-diameter cylindrical part 211a of the cylindrical mounting part 211 in the longitudinal direction, the protrusion 253 of the hook member 251 is engaged in the annular recess 225a or 247a or the cutout holes 265a of the dust collecting hood 221, 241 or 261 in the radial direction. Therefore, the dust collecting hood 221, 241 or 261 can be reliably held attached to the cylindrical mounting part 211, and the dust collecting hood 221, 241 or 261 can be prevented from becoming detached during operation. Further, with the construction in which the protrusion 253 can be disengaged from the annular recess 225a or 247a or the cutout holes 265a by pushing in the press part 255 against the biasing force of the coil spring 257, the depth of engagement of the protrusion 253 into the annular recess 225a or 247a or the cutout holes 265a can be increased by increasing the protruding height of the protrusion 253. Thus, the dust collecting hood 221 can be reliably held in the removal prevented state and can be easily detached.

When the small-diameter cylindrical part 211a or the hook member 251 is made of resin, a biasing member for biasing the hook member 251 so as to normally hold it in the engaged position may be formed by a resin spring which is integrally formed with the small-diameter cylindrical part 211 a or the hook member 251. According to this embodiment, however, as for the coil spring 257 for biasing the hook member 251 so as to hold it in the engaged position in which the front and rear ends 251a, 251b abut against the inner surface of the small-diameter cylindrical part 211a, it is formed separately from the small-diameter cylindrical part 211a and the hook member 251. Therefore, compared with the above-described construction using the resin spring, sag of the coil spring 257 is less, so that durability can be increased.

Further, according to this embodiment, the two hook members 251 are disposed oppositely on the outer circumferential surface of the small-diameter cylindrical part 211a. Therefore, when the removal prevention of the hook member 251 is released, the press parts 255 of the two opposed hook members 251 can be pushed toward each other with user's fingers, so that it is easy to operate.

In the above-described embodiment, as an example of a power tool, the hammer drill 101 is described which can be switched between hammering mode in which the hammer bit 119 performs hammering movement and hammer drill mode in which the hammer bit 119 performs hammering movement in the axial direction and drilling movement in the circumferential direction. Further, the dust collecting device 210 is described as being applicable to several different operations by selectively replacing the dust collecting hood 221 for drilling operation, the dust collecting hood 241 for chipping operation and the dust collecting hood 261 for dust suction bits which are components of the dust collecting device 210, with each other. In another embodiment of the invention, the dust collecting device 210 can be constructed by combination of the cylindrical mounting part 211 and the dust collecting hood 261 for dust suction bits without providing the dust collecting hood 221 for drilling operation and the dust collecting hood 241 for chipping operation. Specifically, the dust collecting device designed specifically for dust suction bits can be provided which is used for drilling operation using the dust suction bit 119 having the dust suction hole 120.

Further, in the above-described embodiment, it is constructed such that a protruding part provided on the cylindrical mounting part 211, or the protrusion 253 of the hook member 251, is engaged with a recessed part provided in the dust collecting hood 221, 241 or 261, or the annular recess 225a, 247a or the cutout hole 265a. It may however be constructed vice versa such that a recessed part is provided in the hook member 251 and a protruding part is provided on the dust collecting hood 221, 241 or 261.

### (Second Embodiment of the Invention)

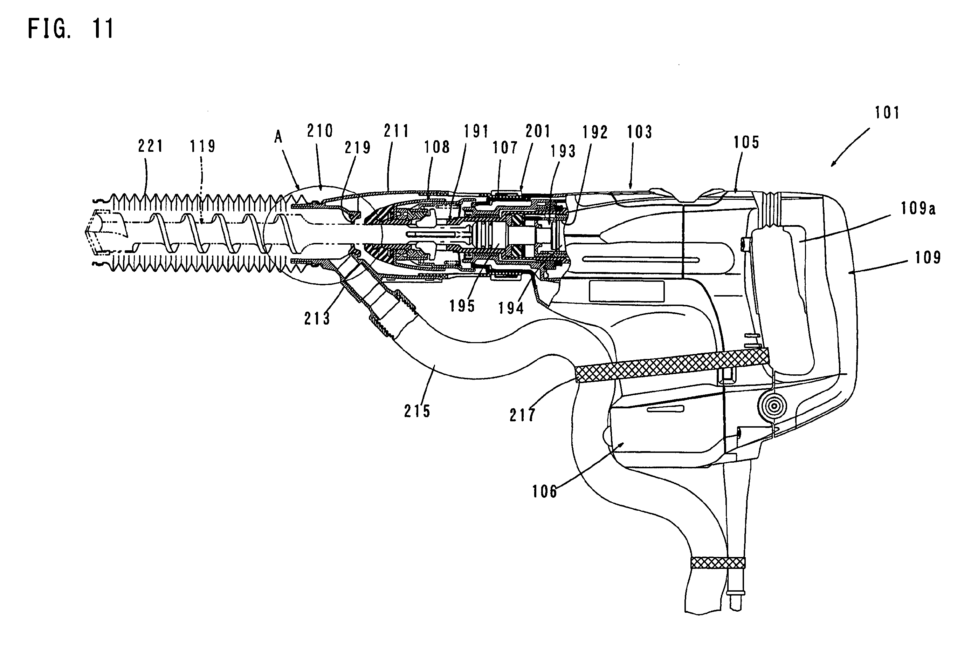

A dust collecting device according to a second embodiment of the invention is now described with reference to FIGS. 11 to 14. This embodiment is explained as being applied to an electric hammer drill which is a representative example of a power tool. FIG. 11 shows a hammer drill 101 with an auxiliary handle in the form of a side grip 201 (only partly shown in the drawing) and a dust collecting device 210 attached thereto. The construction ofthe hammer drill 101 is now briefly explained with reference to FIG. 11. The hammer drill 101 mainly includes a body 103 that forms an outer shell of the hammer drill 101, an elongate hammer bit 119 detachably coupled to a tip end region (on the left as viewed in FIG. 11) of the body 103 via a tool holder 191, and a main handle in the form of a handgrip 109 that is connected to the body 103 on the side opposite the hammer bit 119 and designed to be held by a user. The body 103 and the hammer bit 119 are features that correspond to the "tool body" and the "tool bit", respectively, according to the invention. The hammer bit 119 is inserted into a bit insertion hole of the tool holder 191 and held by a chuck 108 such that it is allowed to reciprocate with respect to the tool holder in its axial direction and prevented from rotating with respect to the tool holder in its circumferential direction. For the sake of convenience of explanation, the side of the hammer bit 119 is taken as the front and the side of the handgrip 109 as the rear.

The body 103 mainly includes a motor housing 106 that houses a driving motor (not shown), a crank housing 105 that houses a motion converting mechanism (not shown), a striking mechanism 193 and a power transmitting mechanism (not shown), and a generally cylindrical barrel 107 connected to a front of the crank housing 105. Rotating power of the driving motor is appropriately converted into linear motion by the motion converting mechanism 113 which mainly includes a crank mechanism, and then transmitted to the striking mechanism 193. As a result, an impact force is generated in the axial direction of the hammer bit 119 via the striking mechanism 193. Further, the speed of the rotating power of the driving motor is appropriately reduced by the power transmitting mechanism which mainly includes a plurality of gears, and then transmitted to the hammer bit 119 via a final shaft in the form of the tool holder 191, so that the hammer bit 119 is caused to rotate in its circumferential direction. The driving motor 111 is driven when a user depresses a trigger 109a disposed on the handgrip 109.

The striking mechanism 193 mainly includes a striking element in the form of a striker 194 which is slidably disposed within a bore of a cylinder 192 together with a piston of the crank mechanism, and an intermediate element in the form of an impact bolt 195 which is slidably disposed in the tool holder 191. The striker 194 is driven via an air spring action (pressure fluctuations) of an air chamber of the cylinder 192 which is caused by sliding movement of the piston. Then the striker 194 collides with (strikes) the impact bolt 195 and a striking force is transmitted to the hammer bit 119 via the impact bolt 195.

Further, the hammer drill 101 can be appropriately switched between hammering mode and hammer drill mode by a user. In hammering mode, chipping operation is performed on a workpiece by applying only a striking force to the hammer bit 119 in the axial direction, and in hammer drill mode, drilling operation is performed on a workpiece by applying a striking force in the axial direction and a rotating force in the circumferential direction. This technique is well known in the art and not directly related to the invention, and therefore its further description is omitted.

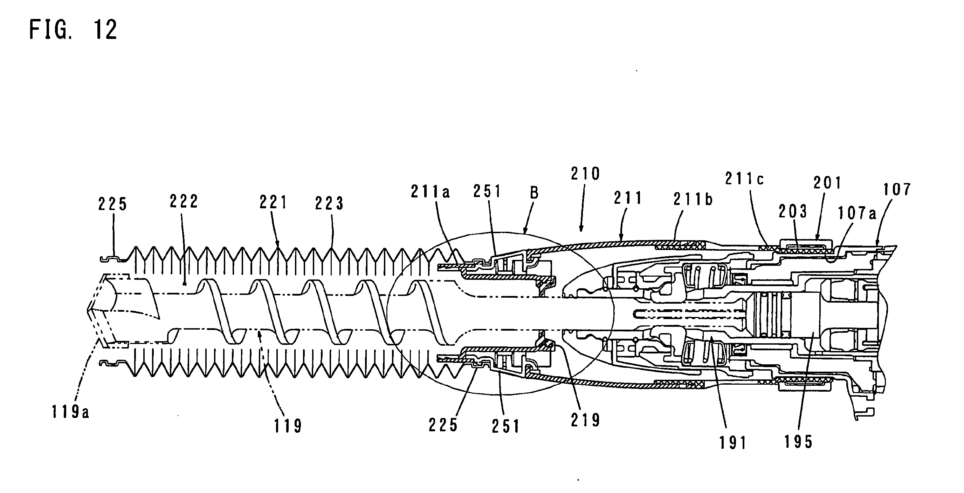

A dust collecting device 210 is now explained with reference to FIGS. 12 to 14. The dust collecting device 210 is attached to the hammer drill 101 having the above-described construction and serves to suck and collect dust generated during operation on a workpiece (such as concrete). The dust collecting device 210 according to this embodiment mainly includes a dust cover in the form of a synthetic resin cylindrical mounting part 211 which is attached to the barrel 107 of the hammer drill 101 together with the side grip 201, and an extendable dust collecting hood 221 for use in drilling operation. The dust collecting hood 221 can be removably attached to a front end of the cylindrical mounting part 211 and is constructed to be able to change its length in the longitudinal direction. The cylindrical mounting part 211 and the dust collecting hood 221 for use in drilling operation are features that correspond to the "dust collecting device body" and the "dust collecting hood", respectively, according to this invention.

As shown in FIG. 12, the cylindrical mounting part 211 is a generally cylindrical member extending in the axial direction of the hammer bit and has both ends open in the axial direction. The cylindrical mounting part 211 has a front portion formed by a small-diameter cylindrical part 211a on which the dust collecting hood 221 for use in drilling operation can be mounted, and a rear portion formed by a large-diameter cylindrical part 211b. Further, a cylindrical part extension 211c is formed contiguously to a rear region (on the right as viewed in FIG. 2) of the large-diameter cylindrical part 211b. The cylindrical part extension 211c extends in the axial direction and is split into several portions in the circumferential direction by a plurality of slits (not shown) each having an open rear end, so that it is allowed to elastically deform in the radial direction.

In order to mount the cylindrical mounting part 211, the cylindrical mounting part 211 is set to cover the front end portion of the barrel 107 from the front (the left as viewed in FIG. 12) and the cylindrical part extension 211c is fixed by a mounting band 203 for the side grip 201 which is mounted to the barrel 107. The mounting band 203 is set to be wrapped around the outer surface of a grip mounting part 107a formed on the barrel 107 and tightened or loosened by using a screw structure (not shown). Specifically, the dust collecting device 210 is fixed together with the side grip 201 on the grip mounting part 107a of the barrel 107 in the body 103 by tightening the cylindrical part extension 211c of the cylindrical mounting part 211 with the mounting band 203.

Further, a hose connecting port 213 (see FIG. 11) is formed on the small-diameter cylindrical part 211a of the cylindrical mounting part 211 and communicates with an inner space of the dust collecting hood 221 which is mounted on the cylindrical mounting part 211. The hose connecting port 213 extends obliquely rearward from the outer surface of the small-diameter cylindrical part 211a, and a dust collecting hose 215 which is used for connection with a dust collector (not shown) is connected to the hose connecting port 213. The dust collecting hose 215 is bound to the motor housing 106 with a banding band 217 in order to be prevented from interfering with the operation. Further, at least during operation, the other end of the dust collecting hose 215 is directly connected to a dust collector (not shown) or connected to a hose on the dust collector side. It is not essential for the dust collecting hose 215 to be connected to a dust collector which is provided separately from the hammer drill 101. For example, if the hammer drill 101 or the dust collecting device itself has a suction source including a motor and a dust collecting fan to be driven by the motor, the other end of the dust collecting hose 215 may be connected to the suction source. Further, a rubber seal 219 is mounted on the small-diameter cylindrical part 211a rearward of the hose connecting port 213 and serves as a sealing member for sealing a clearance between an inner circumferential surface of the small-diameter cylindrical part 211 a and an outer circumferential surface of the hammer bit 119.

The dust collecting hood 221 for use in drilling operation is now explained. As shown in FIG. 12, the dust collecting hood 221 for use in drilling operation mainly includes an accordion bit covering part 223 that covers the hammer bit 119 and can extend and contract in the longitudinal direction. The bit covering part 223 has front and rear ends formed by ring-like open end parts 225. Further, the bit covering part 223 is made of rubber or synthetic resin, and the inner diameter of the front and rear ring-like open end parts 225 is substantially equal to the inner diameter of valleys of the bit covering part 223.

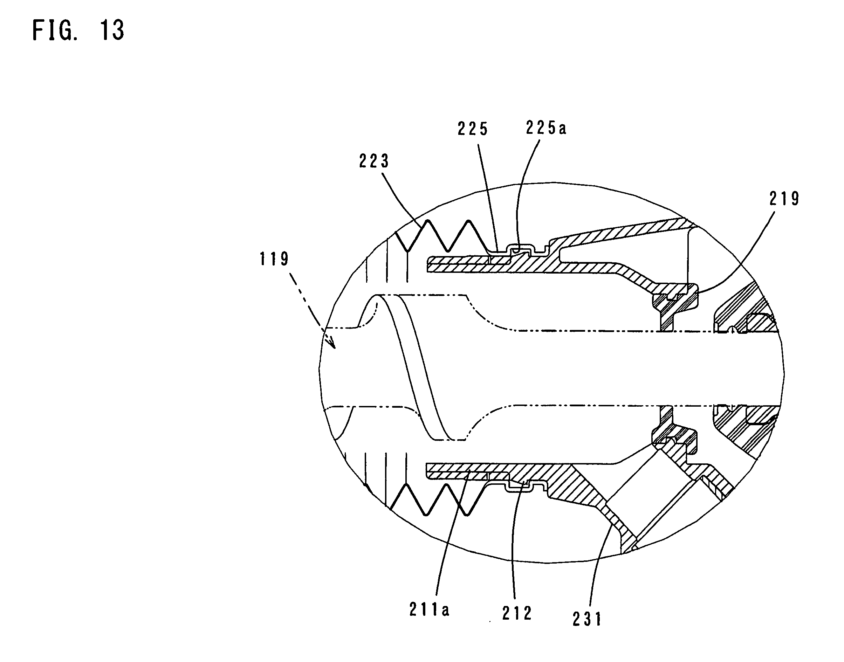

In order to attach the dust collecting hood 221 to the cylindrical mounting part 211, one of the open end parts 225 of the bit covering part 223 is fitted onto the small-diameter cylindrical part 211a of the cylindrical mounting part 211. At this time, as shown in FIG. 13, a circumferential ridge 212 formed on the outer surface of the small-diameter cylindrical part 211a is elastically engaged with a circumferentially extending annular recess 225a which is formed in the inner circumferential surface of the open end part 225 and recessed outward, by utilizing elastic deformation of the open end part 225. Thus, the dust collecting hood 221 is prevented from becoming easily detached from the cylindrical mounting part 211. In order to further ensure this state, in this embodiment, a hook member 251 for removal prevention is provided on the cylindrical mounting part 211.

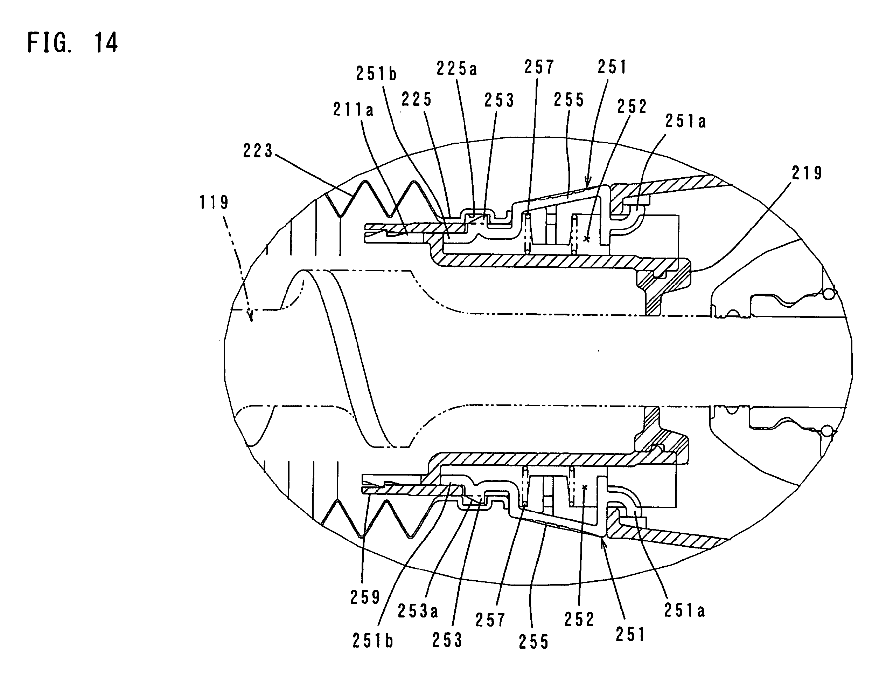

As shown in FIG. 14, in a region in which the open end part 225 of the dust collecting hood 221 is fitted onto the small-diameter cylindrical part 211a of the cylindrical mounting part 211, the removal preventing hook member 251 having a protrusion 253 is mounted to the small-diameter cylindrical part 211a, and the protrusion 253 can be engaged and disengaged with respect to the annular recess 225a of the open end part 225. The annular recess 225a and the hook member 251 are features that correspond to the "hood-side mounting part" and the "body-side mounting part", respectively, according to this invention.

Two hook members 251 are oppositely disposed on the outer circumferential surface of the small-diameter cylindrical part 211a of the cylindrical mounting part 211. A hook housing space 252 for housing each of the hook members 251 is formed in the small-diameter cylindrical part 211a. The hook housing space 252 extends a predetermined length in the longitudinal direction of the cylindrical mounting part 211 and is recessed radially inward from the outer surface. Each of the hook members 251 is formed of a generally plate-like member extending in the longitudinal direction, and the protrusion 253 is integrally formed on the front outer surface of the hook member 251 and protrudes in a radial direction of the cylindrical mounting part 211. A press part 255 is integrally formed on the rear outer surface of the hook member 251. The hook member 251 is disposed in the hook housing space 252, and in this state, the hook member 251 is allowed to move in the radial direction between an engaged position in which the protrusion 253 is engaged with the annular recess 225a formed in the inner surface of the open end part 225 of the dust collecting hood 221, and a disengaged position in which such engagement is released.

Further, a coil spring 257 is disposed within the hook housing space 252 and biases the hook member 251 toward the engaged position. The coil spring 257 is disposed between the bottom of the hook housing space 252 and the inner surface of the hook member 251 and biases the hook member 251 radially outward. The coil spring 257 is a feature that corresponds to the "elastic member" according to this invention. When the hook member 251 is placed in the engaged position, the protruding height of the protrusion 253 in the radial direction is higher than that of the above-described ridge 212 of the small-diameter cylindrical part 211a. Thus, the amount of engagement of the protrusion 253 with the annular recess 225a of the open end part 225 is larger than that of the ridge 212, so that the retaining force is increased. Further, the engagement of the protrusion 253 with the annular recess 225a is maintained by the biasing force of the coil spring 257.

The hook member 251 is disposed within the hook housing space 252 such that front and rear ends 251a, 251b of the hook member 251 in the longitudinal direction is placed in the inside of the small-diameter cylindrical part 211a. Further, the front and rear ends 251a, 251b abut against the inner surface of the small-diameter cylindrical part 211a in the radial direction by the biasing force of the coil spring 257, so that the hook member 251 is held in the engaged position. Thus, the inner surface of the small-diameter cylindrical part 211 a serves as a stopper for holding the hook member 251 in the engaged position.

The rear end 251a of the hook member 251 is generally L-shaped and extends radially outward through an opening of a rear wall of the hook housing space 252. In order to mount the hook member 251 to the small-diameter cylindrical part 211a, the rear end 251a of the hook member 251 is inserted through the opening of the rear wall of the hook housing space 252 and the hook member 251 is disposed within the hook housing space 252. At this time, the rear end 251a inserted through the opening of the rear wall of the hook housing space 252 is engaged with the rear wall and thus it does not easily become detached from the small-diameter cylindrical part 211a. Thus, the hook member 251 is prevented from becoming detached from the small-diameter cylindrical part 211a when the hook member 251 is mounted. Further, the front end 251b of the hook member 251 disposed within the hook housing space 252 is held in contact with the inner surface of a ring-like covering member 259 which is fixedly fitted on the outer surface of the front end of the small-diameter cylindrical part 211a in such a manner as to cover a front end region of the hook housing space 252.

When the press part 255 is pushed in with a finger from outside, the hook member 251 is moved to the disengaged position. Specifically, when the press part 255 is pushed in, the hook member 251 is moved within the hook housing space 252 to the disengaged position while being held substantially in parallel in the longitudinal direction, and the protrusion 253 is disengaged from the annular recess 225a. Thus, the hook member 251 for preventing removal of the dust collecting hood 221 is released from the dust collecting hood 221. In this state, the dust collecting hood 221 can be detached by pulling the dust collecting hood 221 forward. The press part 255 is a feature that corresponds to the "operating part" according to this invention. When the hook member 251 is placed in the engaged position, the outer surface of the press part 255 is flush with the outer surface of the small-diameter cylindrical part 211a. Therefore, for example, such a trouble that an external force is unintentionally applied to the press part 255 during operation so that the hook member 251 is moved to the disengaged position and its removal prevention is released, can be prevented.

The end surface of the protrusion 253 of the hook member 251 in the protruding direction is formed by an inclined surface 253a which is inclined forward toward the axis. Therefore, when the open end part 225 of the dust collecting hood 221 is fitted onto the small-diameter cylindrical part 211a of the cylindrical mounting part 211, the inclined surface 253a of the protrusion 253 of the hook member 251 is pushed down to the disengaged position by the end of the open end part 225. Then when the protrusion 253 is opposed to the annular recess 225a, the hook member 251 is returned to the engaged position by the biasing force of the coil spring 257. Therefore, the dust collecting hood 221 can be easily attached to the cylindrical mounting part 211 simply by fitting the open end part 225 of the dust collecting hood 221 over the small-diameter cylindrical part 211a of the cylindrical mounting part 211.

The dust collecting hood 221 attached to the cylindrical mounting part 211 is arranged to surround the hammer bit 119, and has a length long enough to cover the entire hammer bit (drill) 119 for use in drilling operation, including a bit tip 119a, as shown in FIG. 12. Specifically, a drilling operation of the hammer drill 101 is performed with the front end of the dust collecting hood 221 being pressed against the surface of the workpiece. Dust generated during the drilling operation is sucked from the front open end part 225 which forms a suction port, into an inner space 222 of the dust collecting hood 221. The dust is then led from the inner space 222 into a dust collector through the hose connecting port 213 of the cylindrical mounting part 211 and the dust collecting hose 215 and collected in the outside dust collector. The accordion type bit covering part 223 contracts when pushed by the workpiece as drilling of the hammer bit 119 proceeds, so that the dust collecting effect can be maintained.

According to this embodiment, when the dust collecting hood 221 is fitted on the small-diameter cylindrical part 211a of the cylindrical mounting part 211 in the longitudinal direction, the protrusion 253 of the hook member 251 is engaged in the annular recess 225a of the dust collecting hood 221 in the radial direction. Therefore, the dust collecting hood 221 can be reliably held attached to the cylindrical mounting part 211, and the dust collecting hood 221 can be prevented from becoming detached during operation. Further, with the construction in which the protrusion 253 can be disengaged from the annular recess 225a by pushing in the press part 255 against the biasing force of the coil spring 257, the depth of engagement of the protrusion 253 into the annular recess 225a can be increased by increasing the protruding height of the protrusion 253. Thus, the dust collecting hood 221 can be reliably held in the removal prevented state and can be easily detached.

When the small-diameter cylindrical part 211a or the hook member 251 is made of resin, a biasing member for biasing the hook member 251 so as to normally hold it in the engaged position may be formed by a resin spring which is integrally formed with the small-diameter cylindrical part 211a or the hook member 251. According to this embodiment, however, as for the coil spring 257 for biasing the hook member 251 so as to hold it in the engaged position in which the front and rear ends 251a, 251b abut against the inner surface of the small-diameter cylindrical part 211a, it is formed separately from the small-diameter cylindrical part 211a and the hook member 251. Therefore, compared with the above-described construction using the resin spring, sag of the coil spring 257 is less, so that durability can be increased.

Further, according to this embodiment, the two hook members 251 are disposed oppositely on the outer circumferential surface of the small-diameter cylindrical part 211a. Therefore, when the removal prevention of the hook member 251 is released, the press parts 255 of the two opposed hook members 251 can be pushed toward each other with user's fingers, so that it is easy to operate.

### (Third Embodiment of the Invention)

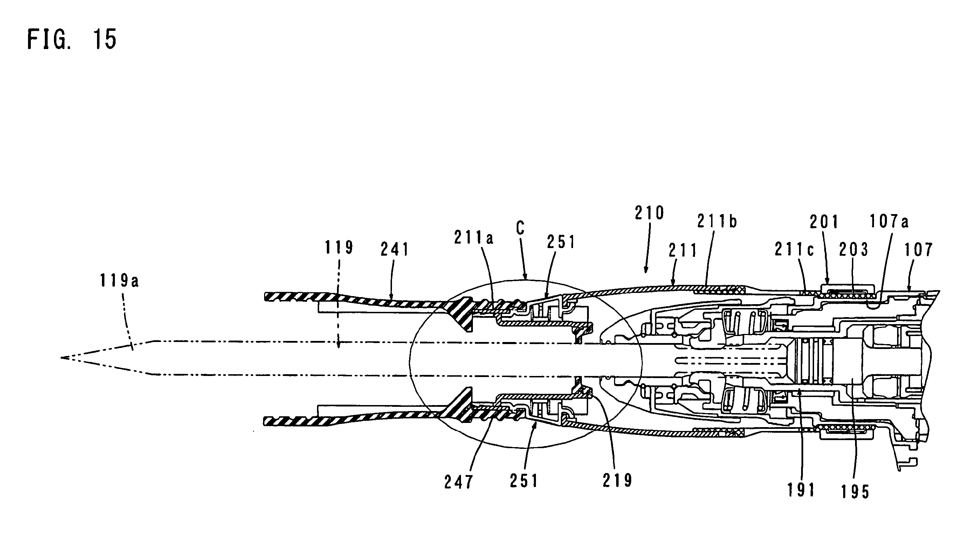

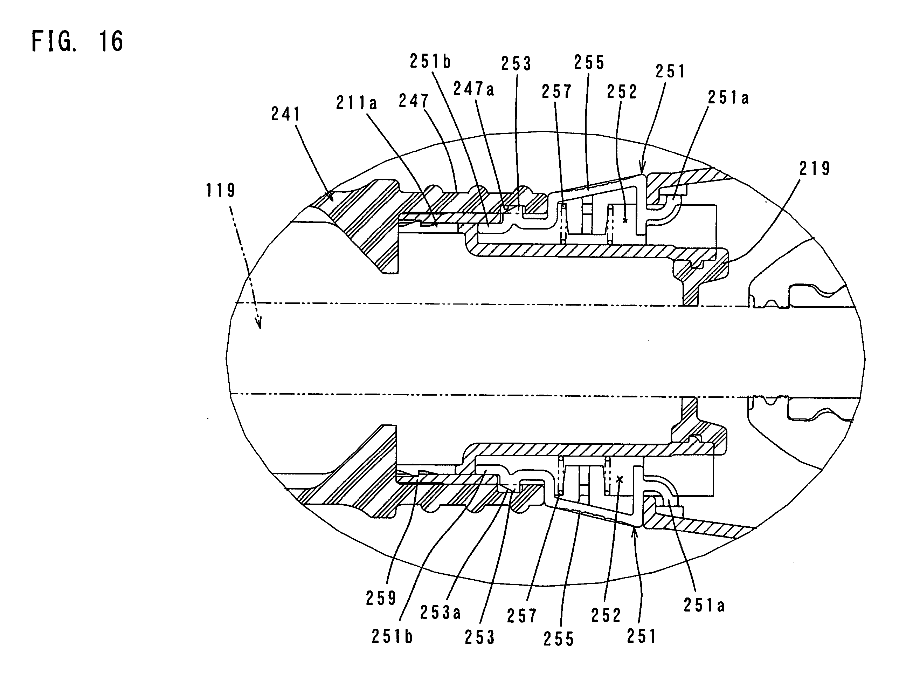

A dust collecting device 210 according to a third embodiment of the invention is now described with reference to FIGS. 15 and 16. This embodiment is explained as being applied to a dust collecting hood 241 for use in chipping operation in which the hammer drill 101 is driven in hammer mode in which the hammer bit 119 performs only a hammering movement. The dust collecting device 210 has the same construction as the second embodiment except for the dust collecting hood 241. Therefore, components of the dust collecting device 210 other than the dust collecting hood 241 are given like numerals as in the second embodiment and not described or only briefly described. The dust collecting hood 241 for use in chipping operation is a feature that corresponds to the "dust collecting hood" according to this invention.

The dust collecting hood 241 for chipping operation is a cylindrical member made of rubber or synthetic resin, having front and rear open ends and having a longitudinal length such that the bit tip 119a of the hammer bit (chisel) 119 for chipping operation protrudes a predetermined length (long enough to be reliably kept visible) from the front end of the dust collecting hood 241 attached to the front end of the cylindrical mounting part 211. A circumferentially extending annular recess 247a is formed in an inner surface of a rear open end part 247 of the dust collecting hood 241 which is fitted over the small-diameter cylindrical part 211 a of the cylindrical mounting part 211. The annular recess 247a of the open end part 247 is a feature that corresponds to the "hood-side mounting part" according to this invention.

In order to attach the dust collecting hood 241 constructed as described above, the rear open end part 247 is fitted over the front end of the small-diameter cylindrical part 211a of the cylindrical mounting part 211. At this time, like in the first embodiment, the inclined surface 253a of the protrusion 253 of the hook member 251 is once pushed down to the disengaged position by the end of the open end part 225, and then when the protrusion 253 is opposed to the annular recess 247a, the hook member 251 is moved to the engaged position by the biasing force of the coil spring 257. Specifically, the protrusion 253 of the hook member 251 is fitted and engaged in the annular recess 247a of the open end part 247 in the radial direction. In this manner, the dust collecting hood 241 is attached to the cylindrical mounting part 211 in such a manner as to be prevented from becoming detached therefrom. At this time, like in the first embodiment, although not shown, the ridge 212 of the small-diameter cylindrical part 211a is engaged with the annular recess 247a in a region other than the region in which the protrusion 253 of the hook member 251 is engaged with the annular recess 247a.

According to this embodiment, the dust collecting hood 241 for chipping operation has the same effect as the above-described dust collecting hood 221 for drilling operation. For example, the dust collecting hood 241 can be reliably held in the attached position on the cylindrical mounting part 211.

### (Fourth Embodiment of the Invention)

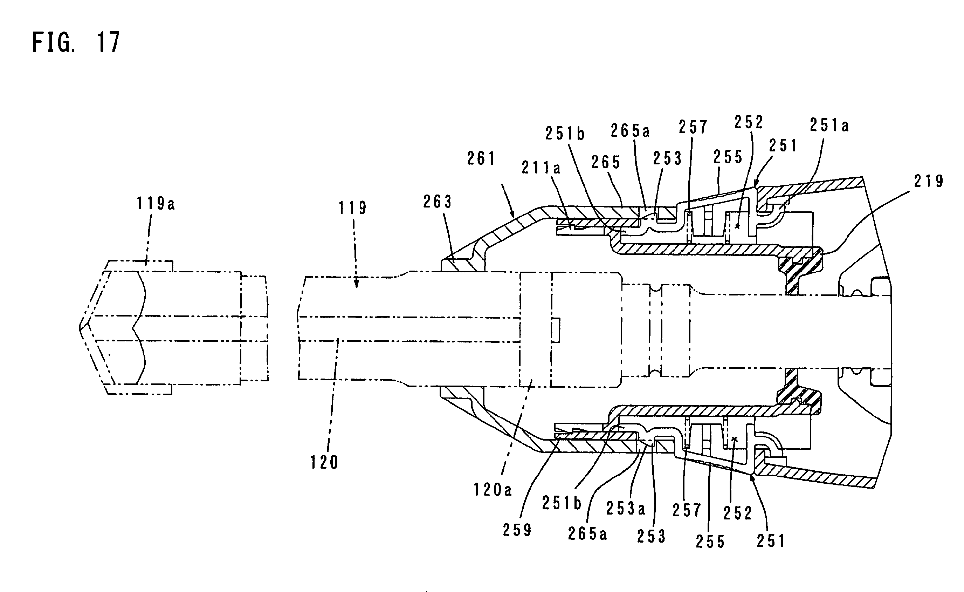

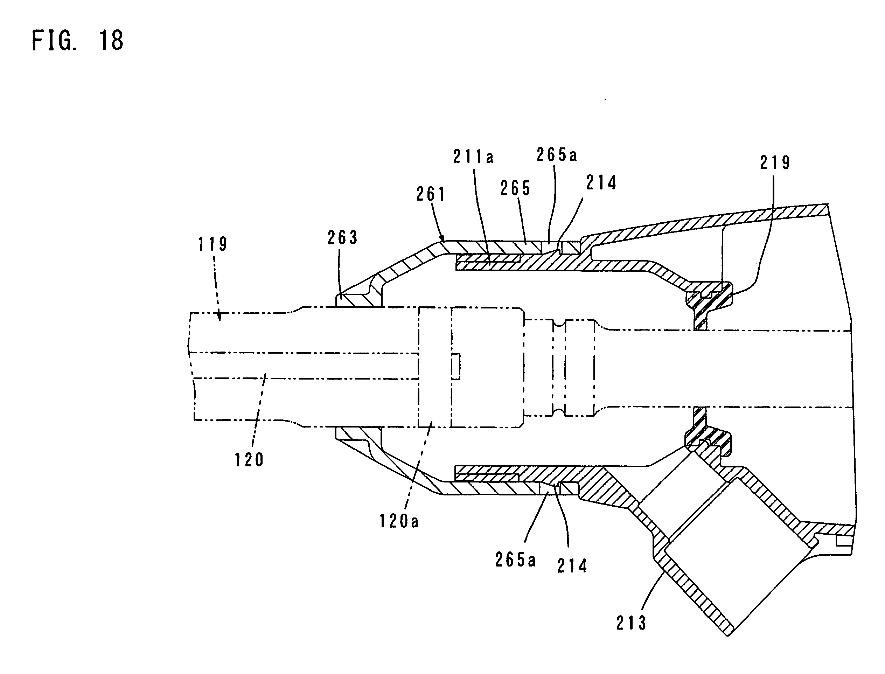

A dust collecting device 210 according to a fourth embodiment of the invention is now described with reference to FIGS. 17 and 18. The dust collecting device 210 of this embodiment is applied to a dust collecting hood 261 which is constructed to collect dust sucked through a dust suction hole 120 of an internal dust suction bit (hereinafter referred to as a dust suction bit) having a dust collecting passage in the form of the dust suction hole 120 extending in the center of the hammer bit 119 in the axial direction, in an operation using the dust suction bit. The dust collecting device 210 has substantially the same construction as the above-described second embodiment except for the dust collecting hood 261. Therefore, components of the dust collecting device 210 other than the dust collecting hood 261 are given like numerals as in the second embodiment and not described or only briefly described. The dust collecting hood 261 for use with a dust suction bit is a feature that corresponds to the "dust collecting hood" according to this invention.

As shown in FIGS. 17 and 18, the dust suction hole 120 of the dust suction bit 119 has an open front end (on the bit tip 119a side) forming a dust suction port and extends in the center of the dust suction bit 119 in the axial direction toward the base (the mounting side) of the dust suction bit 119. The dust suction hole 120 has a dust discharge port 120a formed at a predetermined position and extending radially through the dust suction bit 119.

The dust collecting hood 261 for use with a dust suction bit according to this embodiment is a cylindrical member having open front and rear ends and widened at its middle region in the longitudinal direction toward the rear into a generally trumpet-like form. In order to mount the dust collecting hood 261, the rear open end part 265 is fitted over the small-diameter cylindrical part 211a of the cylindrical mounting part 211 from the front. The dust collecting hood 261 fitted on the small-diameter cylindrical part 211a extends in the axial direction of the hammer bit and covers the dust discharge port 120a of the dust suction hole 120 and its surrounding region. Further, the dust collecting hood 261 is disposed such that the inner circumferential surface of the front open end part 263 is close to the outer surface of the dust suction bit 119 with a slight clearance. Thus, the dust discharge port 120a is covered by a closed space.

A plurality of cutout holes 265a are formed in the circumferential surface of the rear open end part 265 of the dust collecting hood 261 at predetermined intervals in the circumferential direction (four at intervals of 90 degrees in this embodiment). The cutout holes 265a of the open end part 265 are features that correspond to the "hood-side mounting part" according to this invention. Therefore, when the rear open end part 265 is fitted over the front end of the small-diameter cylindrical part 211a of the cylindrical mounting part 211 from outside in order to mount the dust collecting hood 261 on the cylindrical mounting part 211, like in the above-described first and second embodiments, the inclined surface 253a of the protrusion 253 of the hook member 251 mounted to the small-diameter cylindrical part 211a is once pushed down to the disengaged position by the end of the open end part 265, and then when the two protrusions 253 are opposed to two of the four cutout holes 265a, each of the hook members 251 is moved to the engaged position by the biasing force ofthe coil spring 257. Specifically, the protrusion 253 of the hook member 251 is fitted and engaged in the cutout hole 265a of the open end part 265 in the radial direction. In this manner, the dust collecting hood 261 is mounted to the cylindrical mounting part 211 in such a manner as to be prevented from becoming detached therefrom. At this time, as shown in FIG. 18, two protrusions 214 formed on the outer surface of the small-diameter cylindrical part 211a are engaged in the other two cutout holes 265a. Further, like in the first embodiment, the protruding height of the protrusion 253 of the hook member 251 in the radial direction is higher than that of the protrusion 214 of the small-diameter cylindrical part 211a. Thus, the amount of engagement of the protrusion 253 with the cutout hole 265a is larger than that of the protrusion 214 of the small-diameter cylindrical part 211a.

According to this embodiment constructed as described above, the dust collecting hood 261 for a dust suction bit has the same effect as the dust collecting hood 221 for drilling operation and the dust collecting hood 241 for chipping operation. For example, the dust collecting hood 261 can be reliably held in the attached position on the cylindrical mounting part 211.

In the above-described embodiments, the hammer drill 101 is described as a representative example of the power tool, but this invention can also be applied to other power tools, such as an electric hammer in which the hammer bit 119 performs only hammering movement in the axial direction, and an electric drill in which the hammer bit 119 performs only rotation in the circumferential direction.

Further, in the above-described embodiments, the two hook members 251 are oppositely disposed, but it is essential to provide at least one hook member 251. Further, the coil spring 257 may be changed to a resin spring.

Further, in the above-described embodiments, it is constructed such that a protruding part provided on the cylindrical mounting part 211, or the protrusion 253 of the hook member 251, is engaged with a recessed part formed in the dust collecting hood 221, 241 or 261, or the annular recess 225a, 247a or 265a. It may however be constructed vice versa such that the hook member 251 is mounted on the dust collecting hood 221, 241 or 261 and a recessed part which is engaged with the hook member 251 is formed in the small-diameter cylindrical part 211a of the cylindrical mounting part 211. Or it may be constructed such that a recessed part is provided in the hook member 251 and a protruding part is provided on the dust collecting hood 221, 241 or 261.

In view of the scope and spirit of the above-described invention, the following features can be provided, respectively.

### Aspect 1

A dust collecting device, which is attached to a power tool that performs a predetermined operation on a workpiece by driving a tool bit coupled to a front end region of a tool body, and collects dust generated by operation, comprising:
a dust collecting device body which is mounted to the tool body, and a cylindrical dust collecting hood which is fitted on a front end of the dust collecting device body and covers the tool bit, wherein:
   in a region in which the dust collecting hood is fitted onto the dust collecting device body, the dust collecting hood has a hood-side mounting part formed by one of a recessed part and a protruding part and the dust collecting device body has a body-side mounting part formed by the other of the recessed part and the protruding part,
   the body-side mounting part is allowed to move with respect to the dust collecting device body in a direction transverse to an axial direction of the tool bit between an engaged position to be engaged with the hood-side mounting part and a disengaged position to be disengaged from the hood-side mounting part, and in the engaged position, the body-side mounting part retains the dust collecting hood fitted on the dust collecting device body and prevents the dust collecting hood from becoming detached from the dust collecting device body, while, in the disengaged position, the body-side mounting part allows attachment and detachment of the dust collecting hood with respect to the dust collecting device body.

### Aspect 2

The dust collecting device as defined in Aspect 1, further comprising an elastic member which is formed separately from the dust collecting device body and the body-side mounting part and biases the body-side mounting part toward the engaged position in which the body-side mounting part is engaged with the hood-side mounting part.

### Aspect 3

The dust collecting device as defined in Aspects 1 or 2, wherein the body-side mounting part is formed at two opposed locations on an outer circumferential surface of a front end part of the dust collecting device body.

### Aspect 4

The dust collecting device as defined in any one of Aspects 1 to 3, further comprising an operating part which is operated to move the body-side mounting part between the engaged position and the disengaged position, wherein, when the body-side mounting part is in the engaged position, an outer surface of the operating part is flush with an outer surface of the dust collecting device body.

### Aspect 5

A power tool, having the dust collecting device as defined in any one of Aspects 1 to 4. It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

### Description of Numerals

- 101: hammer drill (power tool)
- 103: body (tool body)
- 105: crank housing
- 106: motor housing
- 107: barrel
- 107a: grip mounting part
- 108: chuck
- 109: handgrip (main handle)
- 109a: trigger
- 119: hammer bit (tool bit)
- 119a: bit tip
- 120: dust suction hole
- 120a: dust discharge port
- 191: tool holder
- 192: cylinder
- 193: striking mechanism
- 194: striker
- 195: impact bolt
- 201: side grip
- 203: mounting band
- 210: dust collecting device
- 211: cylindrical mounting part (dust collecting device body)
- 211a: small-diameter cylindrical part
- 211b: large-diameter cylindrical part
- 211c: cylindrical part extension
- 212: projection
- 213: hose connecting port
- 215: dust collecting hose
- 217: binding band
- 219: rubber seal
- 221: dust collecting hood for drilling operation (second dust collecting part)
- 222: inner space (outside dust collecting passage)
- 223: bit covering part
- 225: open end part
- 225a: annular recess (dust collecting part side mounting part)
- 241: dust collecting hood for chipping operation (second dust collecting part)
- 242: inner space (external dust collecting passage)
- 247: rear open end part
- 247a: annular recess (dust collecting part side mounting part)
- 251: hook member (body side mounting part)
- 251 a: rear end
- 251b: front end
- 252: hook housing space
- 253: protrusion
- 253a: inclined surface
- 255: press part (operating part)
- 257: coil spring (elastic member)
- 259: covering member
- 261: dust collecting hood for dust suction bit (dust collecting part)
- 262: inner space (closed space)
- 263: front open end part
- 265: rear open end part
- 265a: cutout hole (dust collecting part side mounting part)

## Claims

1. A dust collecting device (210), which is adapted to be used with a power tool having a tool bit (119) detachably coupled to a front end region of a tool body (103) and adapted to collect dust which is generated when an operation is performed on a workpiece by the tool bit (119), the tool bit (119) being configured as an internal dust suction type bit (119) having a dust collecting passage (120), wherein the dust collecting passage (120) extends in the tool bit (119) in an axial direction of the tool bit (119) and has an open front end formed as a dust suction port and an opening formed as a dust discharge port (120a) at a predetermined position in the extending direction, comprising
a dust collecting device body (211) which is adapted to be mounted to the tool body (103), and
the dust collecting part (261) adapted to cover the tool bit (119),
wherein the dust collecting part (261) is designed for internal dust suction type bits (119) and fitted on the dust collecting device body (211), wherein, when the dust collecting device (210) is mounted on the power tool having the tool bit coupled thereto, the dust collecting part (261) protrudes in the axial direction of the tool bit (119) and covers the dust discharge port (120a) and a front end of the dust collecting part (261) lies close to an outer circumferential surface of the tool bit (119) at a position forward of the dust discharge port (120a) in the axial direction so that a closed space (262) is formed around the dust discharge port (120a),
**characterized in that** the dust collecting part (261) is a cylindrical dust collecting hood (261) having a rear open end part (265) which is adapted to be fitted over a small-diameter cylindrical part (211a) of the dust collecting body (211) from the front to form the closed space (262).

2. The dust collecting device (210) as defined in claim 1, which is adapted to be used with a power tool in which the tool bit (119) configured as the internal dust suction type bit (119) and a second tool bit (119) can be mounted to the tool body (103) by replacement, wherein the second tool bit (119) does not have a dust collecting passage in its inside and performs at least one of hammering operation by linear movement in the axial direction, drilling operation by rotation around its axis and hammer drill operation by linear movement and rotation, wherein:
in place of the dust collecting part (261), a second dust collecting part (221; 241) can be mounted to the dust collecting device body (211) and, when the dust collecting device (210) is mounted on the power tool having the second tool bit coupled thereto, is adapted to cover the second tool bit (119) over a predetermined range in the axial direction of the second tool bit (119) so as to form an external dust collecting passage (222; 242) around the second tool bit (119), and
a user can select either a first dust suction manner which is defined by combination of the internal dust suction type bit (119) and the dust collecting part (261) for internal dust suction type bits (119), when the dust collecting device (210) is mounted on the power tool having the tool bit coupled thereto, or a second dust suction manner which is defined by combination of the second tool bit (119) and the second dust collecting part (221; 241), when the dust collecting device (210) is mounted on the power tool having the second tool bit coupled thereto.

3. The dust collecting device as defined in claim 2, wherein the second tool bit (119) is used with the power tool in which a first bit (119) for performing hammer drill operation by linear movement and rotation and a second bit (119) for performing hammering operation only by linear movement can be attached to the tool body (103) by replacement, and wherein the second dust suction manner includes a first operation dust suction manner that is defined by combination of the first bit (119) and a first bit dust collecting part (221) which covers the first bit (119) along its entire length and a second operation dust suction manner that is defined by combination of the second bit (119) and a second bit dust collecting part (241) which covers a region of the second bit (119) other than a bit tip (119a) and the user can select either the first operation dust suction manner or the second operation dust suction manner, when the dust collecting device (210) is mounted on the power tool.

4. The dust collecting device as defined in any one of claims 1 to 3, wherein:
in a region in which the dust collecting part (261) is fitted on the dust collecting device body (211), the dust collecting part (261) has a dust collecting part side mounting part (265a) formed by one of a recessed part and a protruding part, and the dust collecting device body (211) has a body side mounting part (251) formed by the other of the recessed part and the protruding part, and
the body side mounting part (251) can be moved in a direction transverse to the axial direction of the tool bit (119) with respect to the dust collecting device body (211) between an engaged position to be engaged with the dust collecting part side mounting part (265a) and a disengaged position to be disengaged from the dust collecting part side mounting part (265a), and in the engaged position, the body side mounting part (251) prevents the dust collecting part (261) fitted on the dust collecting device body (211) from becoming detached from the dust collecting device body (211) and holds this state, while in the disengaged position, the body side mounting part (251) allows the dust collecting part (261) to be mounted to and removed from the dust collecting device body (211).

5. The dust collecting device as defined in claim 2 or 3, wherein:
in a region in which the second dust collecting part (221; 241) is fitted on the dust collecting device body (211), the second dust collecting part (221; 241) has a dust collecting part side mounting part (225a; 247a) formed by one of a recessed part and a protruding part, and the dust collecting device body (211) has a body side mounting part (251) formed by the other of the recessed part and the protruding part, and
the body side mounting part (251) can be moved in a direction transverse to the axial direction of the tool bit (119) with respect to the dust collecting device body (211) between an engaged position to be engaged with the dust collecting part side mounting part (225a; 247a) and an disengaged position to be disengaged from the dust collecting part side mounting part (225a; 247a), and in the engaged position, the body side mounting part (251) prevents the second dust collecting part (221; 241) fitted on the dust collecting device body (211) from becoming detached from the dust collecting device body (211) and holds this state, while in the disengaged position, the body side mounting part (251) allows the second dust collecting part (221; 241) to be mounted to and removed from the dust collecting device body (211).

6. A power tool, having the dust collecting device (210) as defined in any one of claims 1 to 5.

## Patentansprüche

1. Staubsammelvorrichtung (210), die angepasst ist, mit einem Kraftwerkzeug verwendet zu werden, das ein Werkzeug-Bit (119) lösbar gekoppelt an einem vorderen Endteil eines Werkzeugkörpers (103) hat, und angepasst ist, Staub zu sammeln, der erzeugt wird, wenn ein Arbeitsvorgang an einem Werkstück durch das Werkzeug-Bit (119) ausgeführt wird, wobei das Werkzeug-Bit (119) als ein internes Staubansaug-Bit (119) konfiguriert ist, das eine Staubsammelpassage (120) hat, wobei sich die Staubsammelpassage (120) in dem Werkzeug-Bit (119) in einer axialen Richtung des Werkzeug-Bits (119) erstreckt und ein offenes vorderes Ende, das als eine Staubansaugöffnung ausgebildet ist, und eine Öffnung hat, die als eine Staubauslassöffnung an einer vorbestimmte Position in der Erstreckungsrichtung ausgebildet ist, mit
einem Staubsammelvorrichtungskörper (211), der angepasst ist, an den Werkzeugkörper (103) montiert zu werden, und
einem Staubsammelteil (261), das zum Bedecken des Werkzeug-Bits (119) angepasst ist,
wobei das Staubsammelteil (261) für interne Staubansaug- Bits (119) gestaltet ist und auf den Staubsammelvorrichtungskörper (211) gesetzt ist, wobei, wenn die Staubsammelvorrichtung (210) an das Kraftwerkzeug montiert ist, das das Werkzeug-Bit daran gekoppelt hat, das Staubsammelteil (261) in die axiale Richtung des Werkzeug-Bits (119) vorsteht und die Staubauslassöffnung (120a) bedeckt und ein vorderes Ende des Staubsammelteils (261) nahe einer äußeren Umfangsfläche des Werkzeug-Bits (219) an einer Position vor der Staubauslassöffnung (120a) in der axialen Richtung liegt, so dass ein geschlossener Raum (262) um die Staubauslassöffnung (120a) ausgebildet ist,
**dadurch gekennzeichnet, dass** das Staubsammelteil (261) eine zylindrische Staubsammelhaube (261) ist, die einen hinteren offenen Endteil (265) hat, der angepasst ist, auf einen zylindrischen Teil mit kleinem Durchmesser (211a) des Staubsammelkörpers (211) zum Ausbilden des geschlossenen Raums (262) von vorne gesetzt zu werden.

2. Staubsammelvorrichtung (210) nach Anspruch 1, die angepasst ist, mit einem Kraftwerkzeug verwendet zu werden, in welchem das Werkzeug-Bit (119) als das interne Staubansaug- Bit (119) konfiguriert ist, und ein zweites Werkzeug-Bit (119) kann an den Werkzeugkörper (103) durch Austausch montiert werden, wobei das zweite Werkzeug-Bit (119) keine Staubsammelpassage in seinem Inneren hat und mindestens einen von einem Hammerarbeitsgang durch lineare Bewegung in die axiale Richtung, einem Drillarbeitsgang durch Drehen um seine Achse, und einem Hammer-Drill-Arbeitsgang durch lineare Bewegung und Drehung ausführt, wobei
anstelle des Staubsammelteils (261) ein zweites Staubsammelteil (221; 241) an den Staubsammelvorrichtungskörper (211) montiert werden kann, und, wenn die Staubsammelvorrichtung (210) an das Kraftwerkzeug montiert ist, das das zweite Werkzeug-Bit daran gekoppelt hat, es angepasst ist, das zweite Werkzeug-Bit (119) über einen vorbestimmten Bereich in der axialen Richtung des zweiten Werkzeug-Bits (119) zu bedecken, so dass eine externe Staubsammelpassage (222; 242) um das zweite Werkzeug-Bit (119) ausgebildet ist, und
ein Benutzer entweder eine erste Staubsammelart wählen kann, welche durch die Kombination des internen Staubansaug-Bits (119) und des Staubsammelteils (261) für interne Staubansaug-Bits (119) definiert ist, wenn die Staubsammelvorrichtung (210) an das Kraftwerkzeug montiert ist, das das Werkzeug-Bit daran gekoppelt hat, oder eine zweite Staubsammelart wählen kann, welche durch die Kombination des zweiten Werkzeug-Bits (119) und des zweiten Staubsammelteils (221; 242) definiert ist, wenn die Staubsammelvorrichtung (210) an das Kraftwerkzeug montiert ist, das das zweite Werkzeug-Bit daran gekoppelt hat.

3. Staubsammelvorrichtung nach Anspruch 2, bei dem das zweite Werkzeug-Bit (119) mit einem Kraftwerkzeug verwendet wird, an welches ein erstes Bit (119) zum Ausführen eines Hammer-Drill-Arbeitsvorganges durch lineare Bewegung und Rotation und ein zweites Bits (119) zum Ausführen nur eines Hammerarbeitsvorganges durch lineare Bewegung an dem Werkzeugkörper (103) durch Austausch angebracht werden kann, und bei dem die zweite Staubsammelart eine erste Staubansaugvorgangsart, die durch Kombination des ersten Bits (119) und eines ersten Bit-Staubsammelteils (221), der das erste Bit (119) entlang seiner gesamten Länge abdeckt, definiert ist, und eine zweite Staubansaugvorgangsart enthält, die durch Kombination des zweiten Bits (119) und eines zweiten Bit-Staubsammelteils (241), das einen anderen Bereich des zweiten Bits (119) als eine Bit-Spitze (119a) bedeckt, definiert ist, und der Benutzer entweder die erste Staubansaugvorgangsart oder die zweite Staubansaugvorgangsart wählen kann, wenn die Staubsammelvorrichtung (210) an das Kraftwerkzeug montiert ist.

4. Staubsammelvorrichtung nach einem der Ansprüche 1 bis 3, bei der
in einem Bereich, in welchem der Staubsammelteil (261) auf den Staubsammelvorrichtungskörper (211) gesetzt ist, das Staubsammelteil (261) einen Staubsammelteil-seitigen Montierteil (265) hat, der durch einen von einem ausgenommen Teil und einem hervorstehenden Teil gebildet ist, und der Staubsammelvorrichtungskörper (211) einen körperseitigen Montierteil (251) hat, der durch den anderen von dem ausgenommen Teil und dem vorstehenden Teil gebildet ist, und
der körperseitige Montierteil (251) in eine Richtung quer zu der axialen Richtung des Werkzeug-Bits (119) mit Bezug auf den Staubsammelvorrichtungskörper (211) zwischen einer Eingriffsposition, um mit dem Staubsammelteil-seitigen Montierteil (265) in Eingriff zu stehen, und einer gelösten Position bewegt werden kann, um von dem Staubsammelteil-seitigen Montierteil (265a) gelöst zu sein, und in der Eingriffsposition verhindert der körperseitige Montierteil (251), dass das Staubsammelteil (261), das auf den Staubsammelvorrichtungskörper (211) gesetzt ist, von dem Staubsammelvorrichtungskörper (211) gelöst wird, und hält diesen Zustand, während in der gelösten Position der körperseitige Montierteil (251) es dem Staubsammelteil (261) ermöglicht, an den Staubsammelvorrichtungskörper (211) montiert und von diesem gelöst zu werden.

5. Staubsammelvorrichtung nach Anspruch 2 oder 3, bei der
in einem Bereich, in welchem das zweite Staubsammelteil (221; 241) auf den Staubsammelvorrichtungskörper (211) gesetzt ist das zweite Staubsammelteil (221; 241) einen Staubsammelteil-seitigen Montierteil (225a; 247a) hat, der durch einen von einem ausgenommen Teil und einem vorstehenden Teil gebildet ist, und der Staubsammelvorrichtungskörper (211) einen körperseitigen Montierteil (251) hat, der durch den anderen von dem ausgenommenen Teil und dem vorstehenden Teil gebildet ist, und
der körperseitige Montierteil (251) in eine Richtung quer zu der axialen Richtung des Werkzeug-Bits (119) mit Bezug auf den Staubsammelvorrichtungskörper (211) zwischen einer Eingriffsposition, um mit dem Staubsammelteil-seitigen Montierteil (225a; 247a) in Eingriff zu stehen, und einer gelösten Position bewegt werden kann, um von dem Staubsammelteil-seitigen Montierteil (225a; 247a) gelöst zu sein, und in der Eingriffsposition verhindert der körperseitige Montierteil (251), dass das zweite Staubsammelteil (221; 241), das auf den Staubsammelvorrichtungskörper (211) gesetzt ist, von dem Staubsammelvorrichtungskörper (211) gelöst zu werden und hält diesen Zustand, während in der gelösten Position der körperseitige Montierteil (251) es dem zweiten Staubsammelteil (221; 241) ermöglicht, an den Staubsammelvorrichtungskörper (211) montiert und von diesem gelöst zu werden.

6. Kraftwerkzeug, das eine Staubsammelvorrichtung (210) nach einem der Ansprüche 1 bis 5 aufweist.

## Revendications

1. Dispositif collecteur de poussière (210) conçu de sorte à pouvoir être utilisé avec un dispositif électrique équipé d'une mèche (119) couplée de manière détachable à une partie avant d'un corps d'outil (103) et conçu de sorte à collecter la poussière produite lorsqu'une opération est effectuée sur une pièce par la mèche (119) ; la mèche (119) étant configurée comme mèche de type à aspiration de poussière interne (119) dotée d'un passage collecteur de poussière (120), où le passage collecteur de poussière (120) se prolonge dans la mèche (119) dans la direction axiale de la mèche (119) et a une partie avant ouverte formant un orifice d'aspiration de poussière et une ouverture formant un orifice d'évacuation de poussière (120a) au niveau d'une position prédéterminée dans la direction de prolongation, comprenant
un corps de dispositif collecteur de poussière (211) conçu de sorte à être monté sur le corps d'outil (103), et
la partie collectrice de poussière (261) conçue de sorte à recouvrir la mèche (119),
où la partie collectrice de poussière (261) est conçue pour les mèches de type à aspiration de poussière interne (119) et est installée sur le dispositif collecteur de poussière (211), où, lorsque le dispositif collecteur de poussière (210) est monté sur l'outil électrique comprenant la mèche, la partie collectrice de poussière (261) fait saillie dans la direction axiale de la mèche (119) et recouvre l'orifice d'évacuation de poussière (120a) et une partie avant de la partie collectrice de poussière (261) est à proximité d'une surface circonférentielle extérieure de la mèche (119) en avant de l'orifice d'évacuation de poussière (120a) dans la direction axiale de sorte qu'un espace fermé (262) est formé autour de l'orifice d'évacuation de poussière (120a),
**caractérisé en ce que** la partie collectrice de poussière (261) est une hotte collectrice de poussière cylindrique (261) comportant une partie arrière ouverte (265) conçue pour être installée sur une partie cylindrique de faible diamètre (211a) du corps collecteur de poussière (211) à partir de l'avant afin de former l'espace fermé (262).

2. Dispositif collecteur de poussière (210) selon la revendication 1, formé de sorte à pouvoir être utilisé avec un outil électrique (119) dans lequel la mèche (119), configurée comme mèche de type à aspiration de poussière interne (119), et une seconde mèche (119) peuvent être montées sur le corps d'outil (103) en remplacement, où la seconde mèche (119) ne comporte pas de passage collecteur de poussière à l'intérieur et exécute au moins une opération parmi les suivantes : opération de martèlement par mouvement linéaire dans la direction axiale, opération de forage par rotation autour de son axe, et opération de martèlement perforateur par mouvement linéaire et rotation, où :
au lieu de la partie collectrice de poussière (261), une seconde partie collectrice de poussière (221 ; 241) peut être montée sur le corps du dispositif collecteur de poussière (211) et, lorsque le dispositif collecteur de poussière (210) est monté sur l'outil électrique comprenant la seconde mèche, est conçue pour recouvrir la seconde mèche (119) sur une longueur prédéfinie dans la direction axiale de la seconde mèche (119) afin de former un passage collecteur de poussière externe (222 ; 242) autour de la seconde mèche (119), et
un utilisateur peut sélectionner une première manière d'aspiration de poussière définie par une combinaison de la mèche de type à aspiration de poussière interne (119) et de la partie collectrice de poussière (261) pour les mèches de type à aspiration de poussière interne (119) lorsque le dispositif collecteur de poussière (210) est monté sur l'outil électrique comprenant la mèche, ou une seconde manière d'aspiration de poussière définie par combinaison de la seconde mèche (119) et de la seconde partie collectrice de poussière (221 ;241) lorsque le dispositif collecteur de poussière (210) est monté sur le dispositif électrique comprenant la seconde mèche.

3. Dispositif collecteur de poussière selon la revendication 2, dans lequel la seconde mèche (119) est utilisée avec l'outil électrique dans laquelle une première mèche (119) servant à effectuer une opération de martèlement perforateur par mouvement linéaire et rotation, et une seconde mèche (119) servant à effectuer une opération de martèlement uniquement par mouvement linéaire, peuvent être rattachées au corps d'outil (103) en remplacement, et où la seconde manière d'aspiration de poussière comprend une première manière d'aspiration de poussière définie par combinaison de la première mèche (119) et une première partie collectrice de poussière à mèche (221) qui recouvre la première mèche (119) sur toute sa longueur et une seconde manière d'aspiration de poussière définie par combinaison de la seconde mèche (119) et une seconde partie collectrice de poussière à mèche (241) qui recouvre une zone de la seconde mèche (119) autre qu'une pointe de mèche (119a) et l'utilisateur peut sélectionner soit la première manière d'aspiration de poussière, soit la seconde manière d'aspiration de poussière lorsque le dispositif collecteur de poussière (210) est monté sur l'outil électrique.

4. Dispositif collecteur de poussière (210) selon une des revendications 1 à 3, dans lequel :
dans une zone dans laquelle la partie collectrice de poussière (261) est installée sur le corps du dispositif collecteur de poussière (211), la partie collectrice de poussière (261) comporte une partie à montage latéral sur la partie collectrice de poussière (265a) formée d' élément parmi une partie en creux ou une partie en saille, et le corps du dispositif collecteur de poussière (211) comporte une partie à montage latéral sur le corps (251) formée par l'autre élément parmi la partie en creux et la partie en saille, et
la partie à montage latéral sur le du corps (251) peut être déplacée perpendiculairement à la direction axiale de la pointe de mèche (119) par rapport au corps du dispositif collecteur de poussière (211) entre une position en prise destinée à entrer en prise avec la partie à latéral sur la partie collectrice de poussière (265a) et une position hors prise destinée à être dégagée de la partie à montage latéral de la partie collectrice de poussière (265a), et dans la position en prise la partie à montage latéral sur le du corps (251) empêche le dispositif collecteur de poussière (210) installé sur le corps du dispositif collecteur de poussière (211) de se désengager du corps du dispositif collecteur de poussière (211) et garde cet état, tandis que, dans la position hors prise, la partie à montage latéral sur le corps (251) permet de monter la partie collectrice de poussière (261) sur le corps du dispositif collecteur de poussière (211) et de l'en enlever.

5. Dispositif collecteur de poussière selon la revendication 2 ou 3, dans lequel :
dans une zone dans laquelle une seconde partie collectrice de poussière (221 ; 241) est installée sur le corps du dispositif collecteur de poussière (211), la seconde partie collectrice de poussière (221 ; 241) comporte une partie à montage latéral de la partie collectrice de poussière (225, 247a) formée par un élément parmi une partie en creux et une partie en saille, et le corps du dispositif collecteur de poussière (211) a une partie à montage latéral sur le corps (251) formée par l'autre élément parmi la partie en creux et la partie en saille, et
la partie à montage latéral sur le corps (251) peut être déplacée dans une direction perpendiculaire à la direction axiale de la pointe de mèche (119) par rapport au corps du dispositif collecteur de poussière (211) entre une position en prise destinée à entrer en prise avec la partie à montage latéral sur la partie collectrice de poussière (225a, 247a) et une position hors prise destinée à être dégagée de la partie à montage latéral sur la partie collectrice de poussière (225a, 247a), et, dans la position en prise, la partie à montage latéral sur le corps (251) empêche la seconde partie collectrice de poussière (221, 241) installée sur le corps du dispositif collecteur de poussière (211) de se dégager du corps du dispositif collecteur de poussière (211) et garde cet état, tandis que, dans la position hors prise, la partie à montage latéral sur le corps (251) permet de monter la seconde partie collectrice de poussière (221, 241) sur le corps du dispositif collecteur de poussière (211) et de l'en enlever.

6. Outil électrique doté du dispositif collecteur de poussière (210) selon une des revendications 1 à 5.
